(19) Europäisches Patentamt
European Patent Office
Office européen des brevets

(11) **EP 4 783 476 A1**

(12) **EUROPEAN PATENT APPLICATION**
published in accordance with Art. 153(4) EPC

(43) Date of publication:
**29.07.2026  Bulletin 2026/31**

(21) Application number: **24868719.6**

(22) Date of filing: **20.09.2024**

(51) International Patent Classification (IPC):
*H04B 7/0413* (2017.01)    *H04W 72/1268* (2023.01)
*H04W 72/21* (2023.01)      *H04W 72/0446* (2023.01)
*H04W 72/0453* (2023.01)    *H04W 72/0457* (2023.01)
*H04W 72/231* (2023.01)     *H04W 72/232* (2023.01)
*H04W 52/08* (2009.01)      *H04W 52/10* (2009.01)

(52) Cooperative Patent Classification (CPC):
H04B 7/0413; H04W 52/08; H04W 52/10;
H04W 72/0446; H04W 72/0453; H04W 72/0457;
H04W 72/1268; H04W 72/21; H04W 72/231;
H04W 72/232

(86) International application number:
**PCT/KR2024/014199**

(87) International publication number:
**WO 2025/063742 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **20.09.2023   KR 20230125798**

(71) Applicant: **LG Electronics Inc.
Yeongdeungpo-gu
Seoul 07336 (KR)**

(72) Inventors:
 • **GO, Seongwon**
  **Seoul 06772 (KR)**
 • **KIM, Kijun**
  **Seoul 06772 (KR)**
 • **KO, Hyunsoo**
  **Seoul 06772 (KR)**

 • **KIM, Hyungtae**
  **Seoul 06772 (KR)**
 • **YANG, Suckchel**
  **Seoul 06772 (KR)**
 • **KANG, Jiwon**
  **Seoul 06772 (KR)**
 • **PARK, Haewook**
  **Seoul 06772 (KR)**
 • **HWANG, Seunggye**
  **Seoul 06772 (KR)**
 • **SHIM, Jaenam**
  **Seoul 06772 (KR)**
 • **KIM, Seonwook**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND DEVICE FOR UPLINK TRANSMISSION AND RECEPTION IN WIRELESS COMMUNICATION SYSTEM**

(57)    Disclosed are a method and device for uplink transmission and reception in a wireless communication system. The method according to one embodiment of the present disclosure may comprise the steps of: receiving, by means of a terminal, configuration information related to uplink transmission from a first network node, wherein the configuration information includes information on a PL-RS used to acquire downlink path loss estimation for the uplink transmission; receiving the PL-RS from the first network node by means of the terminal; and performing, by means of the terminal, the uplink transmission to a second network node on the basis of the configuration information.

**(Cont. next page)**

## FIG. 13

Receive configuration information related to uplink transmission ⌇~S1301

↓

Receive PL-RS ⌇~S1302

↓

Transmit uplink transmission based on configuration information ⌇~S1303

**Description**

[Technical Field]

The present disclosure relates to a wireless communication system, and in more detail, relates to a method and an apparatus for uplink transmission and reception in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving an uplink signal/channel.

In addition, an additional technical object of the present disclosure is to provide a method and an apparatus for transmitting and receiving an uplink signal/channel to a network node/receiving point (Rx Point) that supports only uplink transmission.

The technical objects to be achieved by the present disclosure are not limited to the above-described technical objects, and other technical objects which are not described herein will be clearly understood by those skilled in the pertinent art from the following description.

[Technical Solution]

A method according to an aspect of the present disclosure may include: receiving, by a user equipment (UE), configuration information related to uplink transmission from a first network node, wherein the configuration information includes information for a pathloss reference signal (PL-RS) used to obtain a downlink pathloss estimate for the uplink transmission; receiving, by the UE, the PL-RS from the first network node; and transmitting, by the UE, the uplink transmission to the second network node based on the configuration information. Power for the uplink transmission may be determined based on a downlink pathloss estimate derived from the PL-RS and a pathloss offset related to the configuration information.

A method according to an additional aspect of the present disclosure may include: transmitting, by a first network node, configuration information related to uplink transmission to a user equipment (UE), wherein the configuration information includes information for a pathloss reference signal (PL-RS) used to obtain a downlink pathloss estimate for the uplink transmission; transmitting, by the first network node, the PL-RS to the UE; and receiving, by a second network node, the uplink transmission from the UE based on the configuration information. Power for the uplink transmission may be determined based on a downlink pathloss estimate derived from the PL-RS and a pathloss offset related to the configuration information.

[Technical Effects]

According to an embodiment of the present disclosure, uplink transmission and reception can be smoothly performed for a network node/reception point (Rx Point) that supports only uplink transmission.

In addition, according to an embodiment of the present disclosure, uplink transmission and reception can be smoothly performed for a network node/reception point (Rx Point) that supports only uplink transmission by using appropriate uplink resources, timing advance, uplink transmission power, uplink beam, etc.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating an uplink-downlink timing relationship in a wireless communication system to which the present disclosure can be applied.
FIG. 8 illustrates a MAC CE for random access response in a wireless communication system to which the present disclosure can be applied.
FIG. 9 illustrates a timing advance command MAC CE in a wireless communication system to which the present disclosure can be applied.
FIG. 10 is a diagram which illustrates an uplink beam management operation using SRS in a wireless communication system to which the present disclosure may be applied.
FIG. 11 is a diagram which illustrates an uplink beam management procedure in a wireless communication system to which the present disclosure may be applied.
FIG. 12 illustrates a signaling method for an uplink transmission and reception method according to an embodiment of the present disclosure.
FIG. 13 is a diagram illustrating an operation of a terminal for an uplink transmission and reception method according to an embodiment of the present disclosure.
FIG. 14 is a diagram illustrating an operation of a device (base station) for an uplink transmission and reception method according to an embodiment of the present disclosure.
FIG. 15 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal

- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

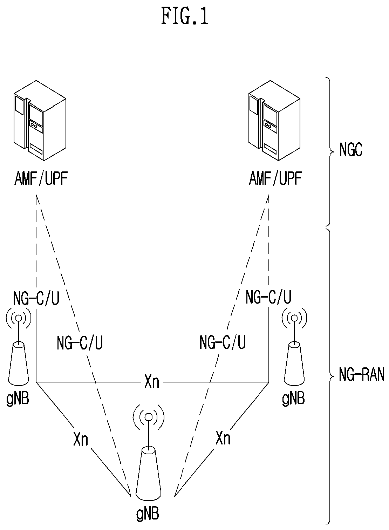

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

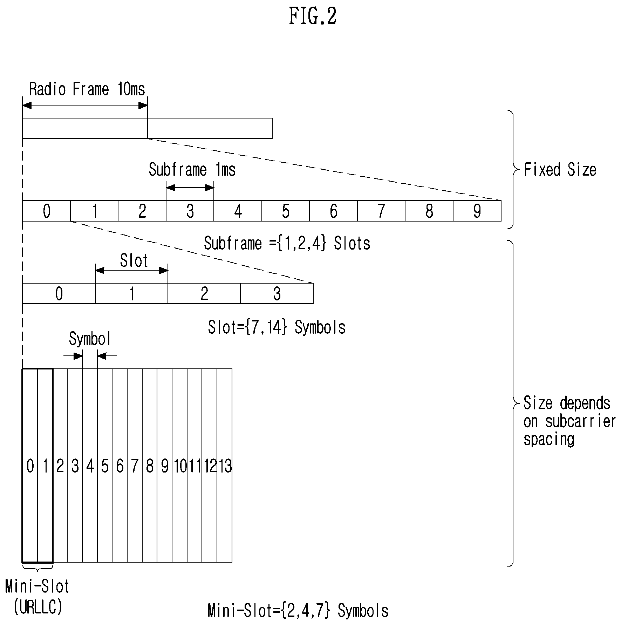

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, μ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table **1]**

| $\mu$ | $\Delta f=2^{\mu}\cdot$ 15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, denseurban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot Nr)$. Here, $\Delta f_{max}$ is $480\cdot 10^3$ Hz and $N_f$ is 4096. Downlink and uplink transmission is configured (organized) with a radio frame having a duration of $T_1=1/(\Delta f_{max}N_f/100)\cdot T_c=10ms$. Here, a radio frame is configured with 10 subframes having a duration of $T_{sf}=(\Delta f_{max}Nr/1000)\cdot Tc=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}\in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

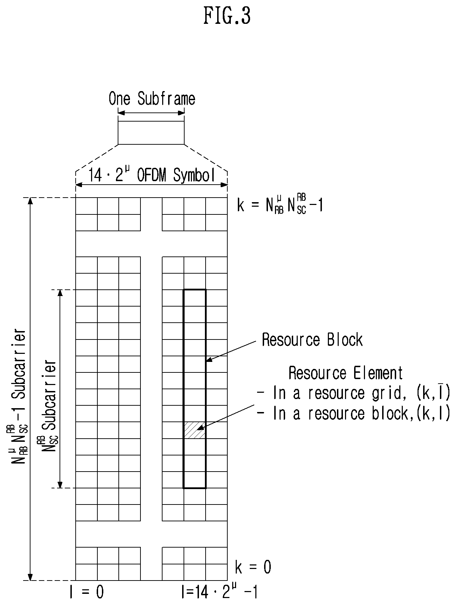

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14.2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$- 1 refers to a position of a symbol in a subframe. When referring to a resource element in a slot, an index pair (k,l) is used. Here, l=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start.\mu}$ is a common resource block that a BWP starts relatively to common resource block 0.

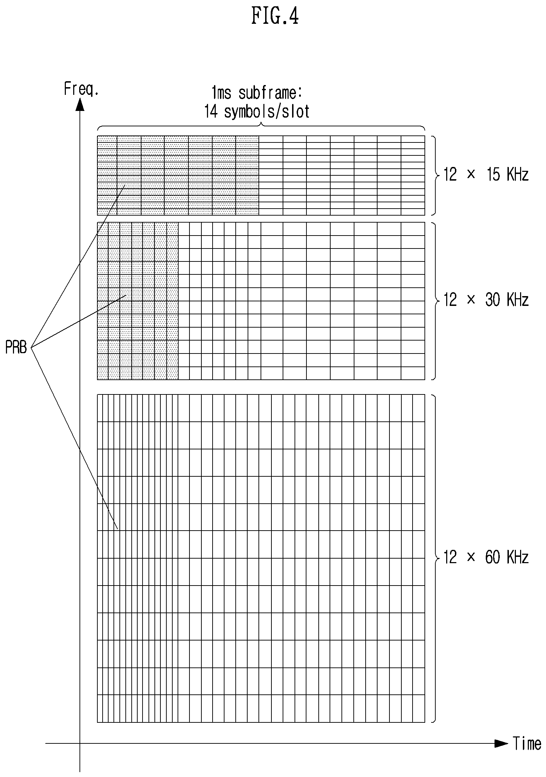

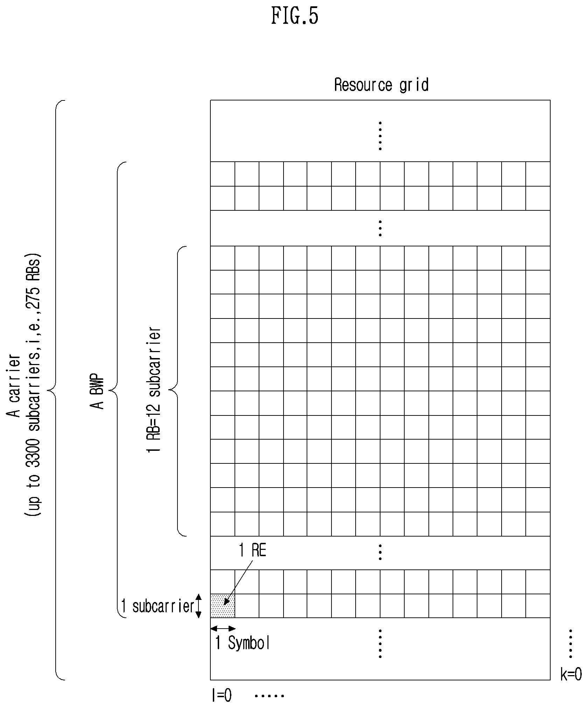

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

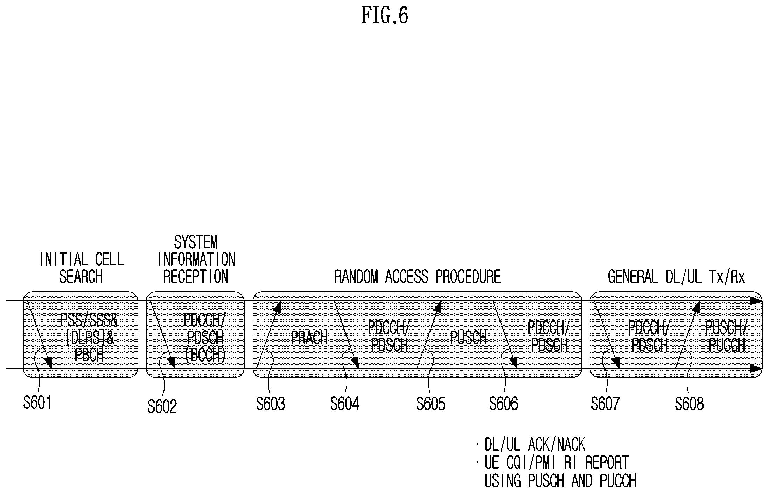

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Timing advance (TA) related operations

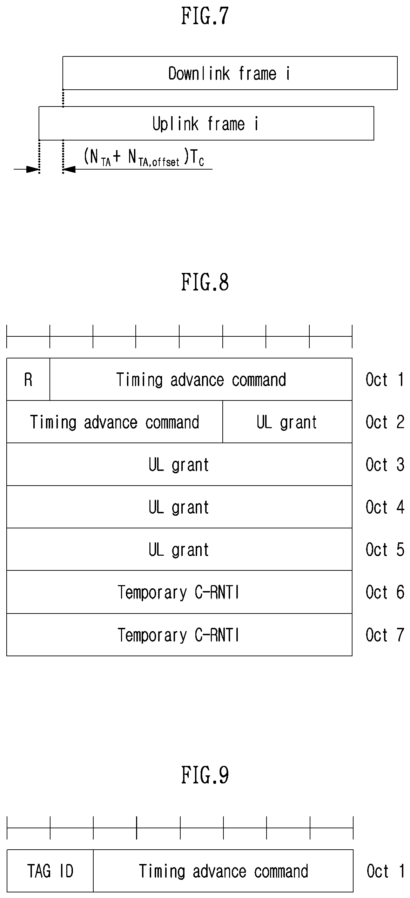

FIG. 7 is a diagram illustrating an uplink-downlink timing relationship in a wireless communication system to which the present disclosure can be applied.

An uplink frame number i for transmission from a UE starts $T_{TA}=(N_{TA}+N_{TA,offset})T_c$ before a start of a corresponding downlink frame (i.e., downlink frame i) in the UE. That is, an uplink frame starts $T_{TA}$ before a corresponding downlink frame. Here, $N_{TA,offset}$ is given in TS 38.213, except for msgA transmission on a PUCH (in this case, $N_{TA}=0$).

Hereinafter, a $N_{TA}$ configuration method will be described.

NTA may be configured through i) a random access response (RAR), or ii) a timing advance command MAC control element (CE).

Case 1: Configuration method through RAR

A timing advance command indicates $N_{TA}$ values with index values of $T_A$=0, 2, ..., 3846 in the case of a random access response or an absolute timing advance command MAC CE ($T_A$) for a timing advance group (TAG). Here, an amount of time alignment for a TAG with SCS of $2^\mu \cdot$ 15 kHz is $N_{TA}=T_A \cdot 16 \cdot 64/2^\mu$. $N_{TA}$ is relative to SCS of the first uplink transmission from a UE after receipt of a random access response or an absolute timing advance command MAC CE.

FIG. 8 illustrates a MAC CE for random access response in a wireless communication system to which the present disclosure can be applied.

A MAC CE (hereinafter MAC RAR) for a random access response has a fixed size as shown in FIG. 8 and includes the following fields.

- R: Reserved bit, set to 0;
- Timing advance command: The Timing Advance Command field indicates an index value $T_A$ used to control an amount of timing adjustment that a MAC entity should apply. A size of the Timing Advance Command field is 12 bits.
- UL Grant: The Uplink Grant field indicates resources to be used for uplink. A size of the UL Grant field is 27 bits.
- Temporary C-RNTI (Temporary C-RNTI): The Temporary C-RNTI field is a temporary identifier used by a MAC entity during random access. A size of the Temporary C-RNTI field is 16 bits.

Case 2: Configuration method through timing advance command (MAC-CE)

A timing advance command ($T_A$) for a TAG indicates an adjustment of the current $N_{TA}$ value (i.e., $N_{TA\_old}$) to a new NTA value (i.e., $N_{TA\_new}$) with index values of TA=0,1,2,...,63. Here, in the case of SCS of $2^\mu \cdot$ 15 kHz, $N_{TA\_new}=N_{TA\_old}$ +$(T_A-3l) \cdot 16 \cdot 64/2^\mu$.

FIG. 9 illustrates a timing advance command MAC CE in a wireless communication system to which the present disclosure can be applied.

A timing advance command MAC CE is identified by a MAC subheader having a logical channel identifier (LCID). A timing advance command MAC CE has a fixed size and composed of 1 octet as follows.

- TAG ID (TAG Identity): This field indicates a TAH identifier of an addressed TAG. A TAG containing SpCell has TAG identifier 0. A length of this field is 2 bits.
- Timing advance command: This field indicates an index value $T_A$ used to control an amount of timing adjustment that a MAC entity should apply. A length of the timing advance command field is 6 bits.

The present disclosure primarily illustrates and describes a 4-step random access procedure (i.e., the RACH procedure), however a 2-step random access procedure is not excluded, therefore the present disclosure can be equally applied to the 2-step random access procedure.

Hereinafter, a method for configuring NTA,offset will be described.

Case 1: Method for configuring a specific value for each serving cell

An information element (IE) for serving cell common configuration (e.g., ServingCellConfigCommon) is used to configure cell-specific parameters of a serving cell of a UE. When a UE accesses a cell from an idle state, the corresponding IE includes parameters that can generally be obtained from an SSB, a master information block (MIB), or SIBs. With this IE, a network provides a UE with information in dedicated signaling when configuring secondary cells (SCells) or additional secondary cell groups (SCGs). Additionally, a network provides a UE with special cells (SpCell) (master cell group (MCG) and SCG) when re-establishing synchronization.

Table 6 illustrates ServingCellConfigCommon IE.

【Table 6】

```
ServingCellConfigCommon ::=          SEQUENCE {
    physCellId              PhysCellId                              OPTIONAL,  -- Cond
        HOAndServCellAdd,
    downlinkConfigCommon             DownlinkConfigCommon                       OPTIONAL,  -- Cond
        HOAndServCellAdd
    uplinkConfigCommon               UplinkConfigCommon                         OPTIONAL,  -- Need M
    supplementaryUplinkConfig        UplinkConfigCommon                         OPTIONAL,  -- Need S
    n-TimingAdvanceOffset            ENUMERATED { n0, n25600, n39936 }                OPTIONAL,  --
        Need S
    ssb-PositionsInBurst        CHOICE {
        shortBitmap             BIT STRING (SIZE (4)),
        mediumBitmap            BIT STRING (SIZE (8)),
        longBitmap             BIT STRING (SIZE (64))
    }                                                              OPTIONAL,  -- Cond AbsFreqSSB
    ssb-periodicityServingCell       ENUMERATED { ms5, ms10, ms20, ms40, ms80, ms160, spare2, spare1 }
        OPTIONAL, -- Need S
    dmrs-TypeA-Position              ENUMERATED {pos2, pos3},
    lte-CRS-ToMatchAround            SetupRelease { RateMatchPatternLTE-CRS }              OPTIONAL, --
        Need M
    rateMatchPatternToAddModList      SEQUENCE (SIZE (1..maxNrofRateMatchPatterns)) OF RateMatchPattern
        OPTIONAL, -- Need N
    rateMatchPatternToReleaseList       SEQUENCE (SIZE (1..maxNrofRateMatchPatterns)) OF RateMatchPatternId
        OPTIONAL, -- Need N
    ssbSubcarrierSpacing             SubcarrierSpacing                          OPTIONAL, -- Cond
        HOAndServCellWithSSB
    tdd-UL-DL-ConfigurationCommon     TDD-UL-DL-ConfigCommon                             OPTIONAL, --
        Cond TDD
    ss-PBCH-BlockPower            INTEGER (-60..50),
    ...,
    [[
    channelAccessMode-r16            CHOICE {
        dynamic                 NULL,
        semiStatic              SemiStaticChannelAccessConfig-r16
    }                                                              OPTIONAL, -- Cond SharedSpectrum
    discoveryBurstWindowLength-r16        ENUMERATED {ms0dot5, ms1, ms2, ms3, ms4, ms5}
        OPTIONAL, -- Need R
    ssb-PositionQCL-r16              SSB-PositionQCL-Relation-r16                  OPTIONAL, -- Cond
        SharedSpectrum
    highSpeedConfig-r16              HighSpeedConfig-r16                         OPTIONAL  -- Need R
    ]],
    [[
    highSpeedConfig-v1700            HighSpeedConfig-v1700                        OPTIONAL, -- Need R
```

```
    channelAccessMode2-r17          ENUMERATED {enabled}                    OPTIONAL, -- Cond
        SharedSpectrum2
    discoveryBurstWindowLength-r17     ENUMERATED {ms0dot125, ms0dot25, ms0dot5, ms0dot75, ms1,
        ms1dot25}  OPTIONAL, -- Need R
    ssb-PositionQCL-r17              SSB-PositionQCL-Relation-r17                OPTIONAL, -- Cond
        SharedSpectrum2
    highSpeedConfigFR2-r17           HighSpeedConfigFR2-r17                  OPTIONAL, -- Need R
    uplinkConfigCommon-v1700         UplinkConfigCommon-v1700                   OPTIONAL, -- Need
        R
    ntn-Config-r17              NTN-Config-r17                  OPTIONAL  -- Need R
    ]],
    [[
    featurePriorities-r17          SEQUENCE {
        redCapPriority-r17             FeaturePriority-r17              OPTIONAL, -- Need R
        slicingPriority-r17            FeaturePriority-r17              OPTIONAL, -- Need R
        msg3-Repetitions-Priority-r17     FeaturePriority-r17             OPTIONAL, -- Need R
        sdt-Priority-r17               FeaturePriority-r17             OPTIONAL  -- Need R
    }                              OPTIONAL  -- Need R
    ]]
    }
```

Referring to table 6, the n-TimingAdvanceOffset field (or parameter) indicates $N_{TA,offset}$ to be applied to all uplink transmissions on a corresponding serving cell. If this field does not exist, a UE applies a value defined for a duplex mode and frequency range (FR) of a corresponding serving cell.

Case 2: Method of applying a predefined value to a serving cell according to a duplex mode and a frequency range (FR)

Table 7 illustrates a value of $N_{TA,offset}$.

[Table 7]

| Frequency range and band of cell used for uplink transmission | $N_{TA\ offset}$ (Unit: Tc) |
|---|---|
| FR1 FDD or TDD band with neither E-UTRA-NR nor NB-IoT-NR coexistence case | 25600 (Note 1) |

(continued)

| Frequency range and band of cell used for uplink transmission | $N_{TA\ offset}$ (Unit: Tc) |
|---|---|
| FR1 FDD band with E-UTRA-NR and/or NB-IoT-NR coexistence case | 0 (Note 1) |
| FR1 TDD band with E-UTRA-NR and/or NB-IoT-NR coexistence case | 39936 (Note 1) |
| FR2 | 13792 |
| Note 1: | The UE identifies $N_{TA\ offset}$ based on the information n-TimingAdvanceOffset as specified in TS 38.331 [2]. If UE is not provided with the information n-TimingAdvanceOffset, the default value of $N_{TA\ offset}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{TAoffset}$ can also be provided for a FDD serving cell. |
| Note 2: | Void |

Referring to Table 7, a value of $N_{TA,offset}$ is determined according to a frequency range (FR) and a band of a cell used for uplink transmission. In the case of neither E-UTRA-NR coexistence nor NB-IoT-NR coexistence, in an FR1 FDD or TDD band, a value of $N_{TA,offset}$ is 25600. In the case of E-UTRA-NR and/or NB-IoT-NR coexistence, in an FR1 FDD band, a value of $N_{TA,offset}$ is 0. In the case of E-UTRA-NR and/or NB-IoT-NR coexistence, in an FR1 TDD band, a value of $N_{TA,offset}$ is 39936. If FR2, a value of $N_{TA,offset}$ is 13792.

As described above, a UE identifies a value of $N_{TA,offset}$ based on the n-TimingAdvanceOffset field (or parameter) information. However, if a UE does not receive n-TimingAdvanceOffset field (or parameter) information, a default value of $N_{TA,offset}$ is configured to 25600 for an FR1 band. In the case of multiple UL carriers within the same timing advance group (TAG), a UE expects the same n-TimingAdvanceOffset value for all UL carriers, and the 39936 value of $N_{TA,offset}$ may also be provided for an FDD serving cell.

Hereinafter, a timing advance group (TAG) will be described.

For cells configured by RRC and also configured with UL, a TAG refers to a serving cell group using the same timing reference cell and the same timing advance value. A TAG including an SpCell of a MAC entity is referred to as a primary timing advance group (PTAG), while a secondary timing advance group (STAG) refers to other TAGs.

An IE (e.g., TAG-Config) for TAG configuration is used to configure parameters for a time-alignment group.

Table 8 illustrates the TAG-Config IE.

【Table 8】

| TAG-Config ::= | SEQUENCE { | | |
|---|---|---|---|
| tag-ToReleaseList | SEQUENCE (SIZE (1..maxNrofTAGs)) OF TAG-Id | OPTIONAL, | -- Need N |
| tag-ToAddModList | SEQUENCE (SIZE (1..maxNrofTAGs)) OF TAG | OPTIONAL | -- Need N |
| } | | | |
| | | | |
| TAG ::= | SEQUENCE { | | |
| tag-Id | TAG-Id, | | |
| timeAlignmentTimer | TimeAlignmentTimer, | | |
| ... | | | |
| } | | | |
| | | | |
| TAG-Id ::= | INTEGER (0..maxNrofTAGs-1) | | |

Referring to Table 8, the tag-Id field (parameter) indicates a TAG of an SpCell or an SCell. This field uniquely identifies a TAG within a scope of a cell group.

Additionally, the timeAlignmentTimer field (parameter) indicates a time alignment timer value ([ms]) for a TAG with tag-Id.

A maximum number of TAGs may be determined by the standard or by a base station, and may be, for example, 4.

An IE (e.g., MAC-CellGroupConfig) for a MAC cell group configuration is used to configure MAC parameters for a cell group, including discontinuous reception (DRX).

Table 9 illustrates part of MAC-CellGroupConfig IE.

【Table 9】

| MAC-CellGroupConfig ::= | SEQUENCE { | |
|---|---|---|
| drx-Config | SetupRelease { DRX-Config } | OPTIONAL, -- Need M |
| schedulingRequestConfig | SchedulingRequestConfig | OPTIONAL, -- Need M |
| bsr-Config | BSR-Config | OPTIONAL, -- Need M |
| tag-Config | TAG-Config | OPTIONAL, -- Need M |
| phr-Config | SetupRelease { PHR-Config } | OPTIONAL, -- Need M |

```
    skipUplinkTxDynamic           BOOLEAN,
    ...,
    [[
    csi-Mask                      BOOLEAN                        OPTIONAL,  -- Need M
    dataInactivityTimer           SetupRelease { DataInactivityTimer }           OPTIONAL   -- Cond MCG-
        Only
    ]],
    [[
    usePreBSR-r16                 ENUMERATED {true}              OPTIONAL,  -- Need R
    schedulingRequestID-LBT-SCell-r16  SchedulingRequestId      OPTIONAL,  -- Need R
    lch-BasedPrioritization-r16   ENUMERATED {enabled}           OPTIONAL,  -- Need R
    schedulingRequestID-BFR-SCell-r16  SchedulingRequestId      OPTIONAL,  -- Need R
    drx-ConfigSecondaryGroup-r16      SetupRelease { DRX-ConfigSecondaryGroup-r16 }       OPTIONAL  --
        Need M
    ]],
    [[
    enhancedSkipUplinkTxDynamic-r16   ENUMERATED {true}                     OPTIONAL,  -- Need
        R
    enhancedSkipUplinkTxConfigured-r16 ENUMERATED {true}                    OPTIONAL   -- Need
        R
    ]],
    [[
    intraCG-Prioritization-r17        ENUMERATED {enabled}            OPTIONAL,  -- Cond LCH-
        PrioWithReTxTimer
    drx-ConfigSL-r17              SetupRelease { DRX-ConfigSL-r17 }      OPTIONAL,  -- Need M
    drx-ConfigExt-v1700          SetupRelease { DRX-ConfigExt-v1700 }   OPTIONAL,  -- Need M
    schedulingRequestID-BFR-r17       SchedulingRequestId        OPTIONAL,  -- Need R
    schedulingRequestID-BFR2-r17      SchedulingRequestId        OPTIONAL,  -- Need R
    schedulingRequestConfig-v1700     SchedulingRequestConfig-v1700    OPTIONAL,  -- Need M
    tar-Config-r17               SetupRelease { TAR-Config-r17 }              OPTIONAL,  -- Need M
    g-RNTI-ConfigToAddModList-r17     SEQUENCE (SIZE (1..maxG-RNTI-r17)) OF MBS-RNTI-SpecificConfig-
        r17      OPTIONAL,  -- Need N
    g-RNTI-ConfigToReleaseList-r17    SEQUENCE (SIZE (1..maxG-RNTI-r17)) OF MBS-RNTI-SpecificConfigId-
        r17    OPTIONAL,  -- Need N
    g-CS-RNTI-ConfigToAddModList-r17   SEQUENCE (SIZE (1..maxG-CS-RNTI-r17)) OF MBS-RNTI-
        SpecificConfig-r17   OPTIONAL,  -- Need N
    g-CS-RNTI-ConfigToReleaseList-r17  SEQUENCE (SIZE (1..maxG-CS-RNTI-r17)) OF MBS-RNTI-
        SpecificConfigId-r17 OPTIONAL,  -- Need N
    allowCSI-SRS-Tx-MulticastDRX-Active-r17  BOOLEAN                    OPTIONAL  --
        Need M
    ]],
    [[
    schedulingRequestID-PosMG-Request-r17 SchedulingRequestId                OPTIONAL,  --
        Need R
```

```
   drx-LastTransmissionUL-r17        ENUMERATED {enabled}                          OPTIONAL    --
      Need R

   ]]

}
```

Referring to Table 9, the TAG-Config IE can be configured through the tag-Config field in the MAC-CellGroup-Config IE.

An IE (e.g., CellGroupConfig) for configuring a cell group is used to configure a master cell group (MCG) or a secondary cell group (SCG). A cell group is associated with one MAC entity, Radio Link Control (RLC) entities and includes a set of logical channels of a primary cell (SpCell) and one or more secondary cells (SCells).

Table 10 illustrates part of CellGroupConfig IE.

【Table 10】

```
CellGroupConfig ::=            SEQUENCE {
   cellGroupId                CellGroupId,
   rlc-BearerToAddModList          SEQUENCE (SIZE(1..maxLC-ID)) OF RLC-BearerConfig
      OPTIONAL,   -- Need N
   rlc-BearerToReleaseList          SEQUENCE (SIZE(1..maxLC-ID)) OF LogicalChannelIdentity
      OPTIONAL,   -- Need N
   mac-CellGroupConfig            MAC-CellGroupConfig                    OPTIONAL,   -- Need
      M
   physicalCellGroupConfig          PhysicalCellGroupConfig                  OPTIONAL,   -- Need
      M
   spCellConfig            SpCellConfig                        OPTIONAL,   -- Need M
   sCellToAddModList          SEQUENCE (SIZE (1..maxNrofSCells)) OF SCellConfig
      OPTIONAL,   -- Need N
   sCellToReleaseList          SEQUENCE (SIZE (1..maxNrofSCells)) OF SCellIndex
      OPTIONAL,   -- Need N
   ...,
```

Referring to Table 10, the MAC-CellGroupConfig IE can be confiugred through the mac-CellGroupConfig field in CellGroupConfig IE.

A maximum number of secondary cell groups may be determined by the standard or by a base station, and may be, for example, 3.

Table 11 illustrates the operations defined in the current standard TS 38.321 Section 5.2.

[Table 11]

```
5.2 Maintenance of Uplink Time Alignment
RRC configures the following parameters for the maintenance of UL time alignment:
RRC configures the following parameters for the maintenance of UL time alignment:
- timeAlignmentTimer (per TAG) which controls how long the MAC entity considers the Serving Cells belonging to
the associated TAG to be uplink time aligned.
The MAC entity shall:
1> when a Timing Advance Command MAC CE is received, and if an $N_{TA}$ has been maintained with the indicated
TAG:
2> apply the Timing Advance Command for the indicated TAG;
2> start or restart the timeAlignmentTimer associated with the indicated TAG.
1> when a Timing Advance Command is received in a Random Access Response message for a Serving Cell belonging to a TAG or in a MSGB for an SpCell:
```

(continued)

> 2> if the Random Access Preamble was not selected by the MAC entity among the contention-based Random Access Preamble:
>
> 3> apply the Timing Advance Command for this TAG;
>
> 3> start or restart the timeAlignmentTimer associated with this TAG.
>
> 2> else if the timeAlignmentTimer associated with this TAG is not running:
>
> 3> apply the Timing Advance Command for this TAG;
>
> 3> start the timeAlignmentTimer associated with this TAG;
>
> 3> when the Contention Resolution is considered not successful; or
>
> 3> when the Contention Resolution is considered successful for SI request, after transmitting HARQ feedback for MAC PDU including UE Contention Resolution Identity MAC CE:
>
> 4> stop timeAlignmentTimer associated with this TAG.
>
> 2> else:
>
> 3> ignore the received Timing Advance Command.
>
> 1> when an Absolute Timing Advance Command is received in response to a MSGA transmission including C-RNTI MAC CE:
>
> 2> apply the Timing Advance Command for PTAG;
>
> 2> start or restart the timeAlignmentTimer associated with PTAG.
>
> 1> when a timeAlignmentTimer expires:
>
> 2> if the timeAlignmentTimer is associated with the PTAG:
>
> 3> flush all HARQ buffers for all Serving Cells;
>
> 3> notify RRC to release PUCCH for all Serving Cells, if configured;
>
> 3> notify RRC to release SRS for all Serving Cells, if configured;
>
> 3> clear any configured downlink assignments and configured uplink grants;
>
> 3> clear any PUSCH resource for semi-persistent CSI reporting;
>
> 3> consider all running timeAlignmentTimers as expired;
>
> 3> maintain $N_{TA}$ of all TAGs.
>
> 2> else if the timeAlignmentTimer is associated with an STAG, then for all Serving Cells belonging to this TAG:
>
> 3> flush all HARQ buffers;
>
> 3> notify RRC to release PUCCH, if configured;
>
> 3> notify RRC to release SRS, if configured;
>
> 3> clear any configured downlink assignments and configured uplink grants;
>
> 3> clear any PUSCH resource for semi-persistent CSI reporting;
>
> 3> maintain $N_{TA}$ of this TAG.
>
> When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the timeAlignmentTimer associated with the SCell as expired.
>
> The MAC entity shall not perform any uplink transmission on a Serving Cell except the Random Access Preamble and MSGA transmission when the timeAlignmentTimer associated with the TAG to which this Serving Cell belongs is not running. Furthermore, when the timeAlignmentTimer associated with the PTAG is not running, the MAC entity shall not perform any uplink transmission on any Serving Cell except the Random Access Preamble and MSGA transmission on the SpCell.

Quasi-co Locaton (OCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

Beam measurement: An operation that a base station or a UE measures a property of a received beamformed signal
Beam determination: An operation that a base station or a UE selects its Tx beam / Rx beam
Beam sweeping: An operation that a spatial region is covered by using a Tx and/or Rx beam for a certain time interval in a pre-determined method
Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, uplink beam management is described.

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS(Sounding Reference Symbol) resource sets configured by (a higher layer parameter) SRS-ResourceSet (through higher layer signaling, RRC signaling, etc.) For each SRS resource set, a UE may be configured with K≥1 SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

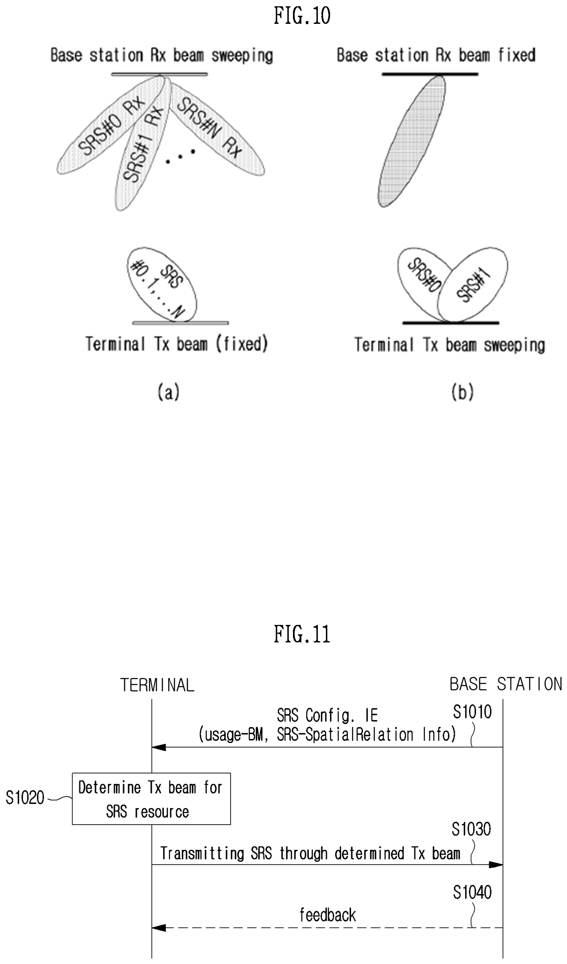

FIG. 10 is a diagram which illustrates an uplink beam management operation using SRS in a wireless communication system to which the present disclosure may be applied.

19

FIG. 10(a) illustrates a Rx beam determination operation of a base station and FIG. 10(b) illustrates a Tx beam sweeping operation of a terminal.

FIG. 11 is a diagram which illustrates an uplink beam management procedure in a wireless communication system to which the present disclosure may be applied.

A terminal receives RRC signaling (e.g., an SRS-Config IE) including a (higher layer parameter) usage parameter configured as 'beam management' from a base station (S 1010).

Table 12 represents an example of an SRS-Config IE(Information Element) and an SRS-Config IE is used for SRS transmission configuration. An SRS-Config IE includes a list of SRS-Resources and a list of SRS-ResourceSets. Each SRS resource set means a set of SRS-resources.

A network may trigger transmission of an SRS resource set by using configured aperiodicSRS-ResourceTrigger (L1 DCI).

【Table 12】

```
ASN1START
TAG-MAC-CELL-GROUP-CONFIG-START


SRS-Config ::=                          SEQUENCE {
srs-ResourceSetToReleaseList            SEQUENCE (SIZE(1..maxNrofSRS-ResourceSets)) OF SRS-ResourceSetId
            OPTIONAL,    -- Need N
srs-ResourceSetToAddModList             SEQUENCE (SIZE(1..maxNrofSRS-ResourceSets)) OF SRS-
ResourceSet                   OPTIONAL,    -- Need N


srs-ResourceToReleaseList               SEQUENCE (SIZE(1..maxNrofSRS-Resources)) OF SRS-ResourceId
            OPTIONAL,    -- Need N
srs-ResourceToAddModList                SEQUENCE (SIZE(1..maxNrofSRS-Resources)) OF SRS-Resource
            OPTIONAL,    -- Need N


tpc-Accumulation                        ENUMERATED {disabled}
            OPTIONAL,    -- Need S
...
}
```

```
SRS-ResourceSet ::=                          SEQUENCE {
srs-ResourceSetId                            SRS-ResourceSetId,
srs-ResourceIdList                           SEQUENCE (SIZE(1..maxNrofSRS-ResourcesPerSet)) OF SRS-
ResourceId              OPTIONAL,    -- Cond Setup


resourceType                                 CHOICE {
aperiodic                                    SEQUENCE {
aperiodicSRS-ResourceTrigger                 INTEGER (1..maxNrofSRS-TriggerStates-1),
csi-RS                                            NZP-CSI-RS-ResourceId
                  OPTIONAL,    -- Cond NonCodebook
slotOffset                                        INTEGER (1..32)
                  OPTIONAL,    -- Need S
...
},
semi-persistent                              SEQUENCE {
associatedCSI-RS                             NZP-CSI-RS-ResourceId
        OPTIONAL, -- Cond NonCodebook
...
},
periodic                                     SEQUENCE {
associatedCSI-RS                             NZP-CSI-RS-ResourceId
        OPTIONAL, -- Cond NonCodebook
...
}
},
usage                                            ENUMERATED {beamManagement, codebook,
nonCodebook, antennaSwitching},
alpha                                        Alpha
                        OPTIONAL, -- Need S
p0                                                INTEGER (-202..24)
                  OPTIONAL, -- Cond Setup
pathlossReferenceRS                          CHOICE {
ssb-Index                                    SSB-Index,
csi-RS-Index                                 NZP-CSI-RS-ResourceId



SRS-SpatialRelationInfo ::=      SEQUENCE {
servingCellId                                ServCellIndex
        OPTIONAL,    -- Need S
referenceSignal                              CHOICE {
ssb-Index                                        SSB-Index,
csi-RS-Index                                     NZP-CSI-RS-ResourceId,
srs                                              SEQUENCE {
resourceId                                       SRS-ResourceId,
```

| | |
|---|---|
| uplinkBWP | BWP-Id |
| } | |
| } | |
| } | |
| | |
| | |
| SRS-ResourceId ::= | INTEGER (0..maxNrofSRS-Resources-1) |

In Table 12, usage represents a higher layer parameter which indicates whether an SRS resource set is used for beam management or is used for codebook-based or non-codebook-based transmission. A usage parameter corresponds to a L1 parameter 'SRS-SetUse'. 'spatialRelationInfo' is a parameter which represents a configuration of a spatial relation between a reference RS and a target SRS. Here, a reference RS may be a SSB, a CSI-RS or a SRS corresponding to a L1 parameter 'SRS-SpatialRelationInfo'. The usage is configured per SRS resource set.

A terminal determines a Tx beam for an SRS resource which will be transmitted based on SRS-SpatialRelation Info included in the SRS-Config IE (S1020). Here, SRS-SpatialRelation Info is configured per SRS resource and represents whether the same beam as a beam used in a SSB, a CSI-RS or a SRS will be applied per SRS resource. In addition, SRS-SpatialRelationInfo may be configured or may not be configured for each SRS resource.

If SRS-SpatialRelationInfo is configured for an SRS resource, the same beam as a beam used in a SSB, a CSI-RS or a SRS is applied and transmitted. But, if SRS-SpatialRelationInfo is not configured for an SRS resource, the terminal randomly determines a Tx beam and transmits an SRS through the determined Tx beam (S1030).

In more detail, for a P-SRS that 'SRS-ResourceConfigType' is configured as 'periodic':

i) when SRS-SpatialRelationInfo is configured as 'SSB/PBCH', a UE transmits a corresponding SRS resource by applying the same spatial domain transmission filter (or generated by a corresponding filter) as a spatial domain Rx filter used for SSB/PBCH reception; or

ii) when SRS-SpatialRelationInfo is configured as 'CSI-RS', a UE transmits a SRS resource by applying the same spatial domain transmission filter used for periodic CSI-RS or SP(semi-persistent) CSI-RS reception; or

iii) when SRS-SpatialRelationInfo is configured as ' SRS', a UE transmits a corresponding SRS resource by applying the same spatial domain transmission filter used for periodic SRS transmission.

Although 'SRS-ResourceConfigType' is configured as 'SP(semi-persistent)-SRS' or 'AP(aperiodic)-SRS', a beam determination and transmission operation may be applied in a way similar to the above.

Additionally, a terminal may receive or may not receive a feedback on an SRS from a base station as in the following three cases (S1040).

i) when Spatial_Relation_Info is configured for all SRS resources in a SRS resource set, a terminal transmits an SRS with a beam indicated by a base station. For example, when Spatial_Relation_Info indicates all the same SSB, CRI or SRI, a terminal repetitively transmits an SRS with the same beam. This case corresponds to FIG. 10(a) as a usage for a base station to select an Rx beam.

ii) Spatial_Relation_Info may not be configured for all SRS resources in an SRS resource set. In this case, a terminal may transmit with freely changing SRS beams. In other words, this case corresponds to FIG. 10(b) as a usage for a terminal to sweep Tx beams.

iii) Spatial_Relation_Info may be configured only for a part of SRS resources in an SRS resource set. In this case, for a configured SRS resource, an SRS may be transmitted with an indicated beam, and for a SRS resource that Spatial_Relation_Info is not configured an SRS may be transmitted by randomly applying a Tx beam by a terminal.

## Uplink Power Control

It may be necessary to increase or decrease transmission power of a terminal (e.g., user equipment (UE) and/or a mobile device) according to a situation in a wireless communication system. As such, controlling transmission power of a terminal and/or a mobile device may be referred to as uplink power control. In an example, a method of controlling transmission power may be applied to satisfy requirements of a base station (e.g., gNB, eNB, etc.) (e.g., a SNR (Signal-to-Noise Ratio), a BER (Bit Error Ratio), a BLER (Block Error Ratio), etc.).

Power control as described above may be performed by an open-loop power control method and a closed-loop power control method.

Specifically, an open-loop power control method means a method of controlling transmission power without a feedback from a transmission device (e.g., a base station, etc.) to a reception device (e.g., a terminal, etc.) and/or a feedback from a reception device to a transmission device. In an example, a terminal may receive a specific channel/signal (a pilot channel/signal) from a base station and estimate strength of reception power by using it. Subsequently, a terminal may control transmission power by using strength of an estimated reception power.

Unlike it, a closed-loop power control method means a method of controlling transmission power based on a feedback from a transmission device to a reception device and/or a feedback from a reception device to a transmission device. In an example, a base station receives a specific channel/signal from a terminal and determines the optimum power level of a terminal based on a power level measured by a received specific channel/signal, SNR, BER, BLER, etc. A base station delivers information on a determined optimum power level (i.e., a feedback) to a terminal through a control channel, etc. and a corresponding terminal may control transmission power by using a feedback provided by a base station.

Hereinafter, a power control method for cases in which a terminal and/or a mobile device performs uplink transmission to a base station in a wireless communication system will be described specifically.

Specifically, hereinafter, power control methods for 1) uplink data channel (e.g., a PUSCH (Physical Uplink Shared Channel)), 2) uplink control channel (e.g., a PUCCH (Physical Uplink Control Channel)), 3) sounding reference signal (SRS), 4) random access channel (e.g., a PRACH (Physical Random Access Channel)) transmission are described. Here, a transmission occasion for a PUSCH, a PUCCH, an SRS and/or a PRACH (i.e., a transmission time unit) (i) may be defined by a slot index (n_s) in a frame of a system frame number (SFN), a first symbol (S) in a slot, the number (L) of consecutive symbols, etc.

Hereinafter, for convenience of a description, a power control method is described based on a case in which a terminal performs PUSCH transmission. Of course, a corresponding method may be extended and applied to other uplink data channel supported in a wireless communication system.

For PUSCH transmission in an active UL bandwidth part (UL BWP) of a carrier (f) of a serving cell (c), a terminal may calculate a linear power value of transmission power determined by the following Equation 3. Subsequently, a corresponding terminal may control transmission power by considering the number of antenna ports and/or the number of SRS ports, etc. for a calculated linear power value.

Specifically, when a terminal performs PUSCH transmission in an active UL BWP (b) of a carrier (f) of a serving cell (c) by using a parameter set configuration based on index j and a PUSCH power control adjustment state based on index 1, a terminal may determine PUSCH transmission power $P_{PUSCH,b,f,c}(i,j,q_d,l)$(dBm) at a PUSCH transmission occasion (i) based on the following Equation 3.

【Equation 3】

$$P_{\text{PUSCH}b,f,c}(i,j,q_d,l) = \min\begin{cases} P_{\text{CMAX},f,c}(i), \\ P_{\text{O\_PUSCH}b,f,c}(j) + 10\log_{10}(2^{\mu} \cdot M_{\text{RB}b,f,c}^{\text{PUSCH}}(i)) + \alpha_{b,f,c}(j) \cdot PL_{b,f,c}(q_d) + \Delta_{\text{TF}b,f,c}(i) + f_{b,f,c}(i,l) \end{cases}$$

In Equation 3, index j represents an index for an open-loop power control parameter (e.g., Po, alpha($\alpha$), etc.) and up to 32 parameter sets may be configured per cell. Index q_d represents an index of a DL RS resource for pathloss (PL) measurement (e.g., $PL_{b,r,c}(q_d)$) and up to 4 measured values may be configured per cell. Index 1 represents an index for a closed-loop power control process and up to 2 processes may be configured per cell.

Specifically, as Po (e.g., $P_{0\_PUSCH,b,f,c}(j)$) is a parameter which is broadcast as part of system information, it may represent target reception power from reception. A corresponding Po value may be configured by considering throughput of a terminal, capacity of a cell, noise and/or interference, etc. In addition, alpha (e.g., $\alpha_{b,f,c}(j)$) may represent a ratio which performs compensation for pathloss. Alpha may be configured as a value from 0 to 1 and according to a configured value, full pathloss compensation or fractional pathloss compensation may be performed. In this case, the alpha value may be configured by considering interference and/or a data rate, etc. between terminals. In addition, $P_{CMAX,f,c}(i)$ may represent configured UE transmit power. In an example, the configured UE transmit power may be interpreted as 'configured maximum UE output power' defined in 3GPP TS 38.101-1 and/or TS38.101-2. In addition, $M_{RB,b,f,c}^{PUSCH}(i)$ may represent bandwidth of PUSCH resource allocation expressed as the number of resource blocks (RB) for a PUSCH transmission occasion based on a subcarrier spacing ($\mu$). In addition, $f_{b,f,c}(i,1)$ related to a PUSCH power control adjustment state may be configured or indicated based on a TPC command field of DCI (e.g., DCI format 0_0, DCI format 0_1, DCI format 2_2, DCI format2_3, etc.).

In this case, a specific RRC (Radio Resource Control) parameter (e.g., SRI-PUSCHPowerControl-Mapping, etc.) may represent a linkage between an SRI (SRS Resource Indicator) field of DCI (downlink control information) and the above-described index j, q_d, 1. In other words, the above-described index j, 1, q_d, etc. may be associated with a beam, a panel and/or a spatial domain transmission filter, etc. based on specific information. Thereby, PUSCH transmission power control in a unit of a beam, a panel and/or a spatial domain transmission filter may be performed.

Parameters and/or information for the above-described PUSCH power control may be configured individually (i.e., independently) per BWP. In this case, corresponding parameters and/or information may be configured or indicated by higher layer signaling (e.g., RRC signaling, a MAC-CE (Medium Access Control-Control Element), etc.) and/or DCI, etc. In an example, a parameter and/or information for PUSCH power control may be transmitted through RRC signaling PUSCH-ConfigCommon, PUSCH-PowerControl, etc. and PUSCH-ConfigCommon, PUSCH-PowerControl may be configured as in the following table 13.

【Table 13】

```
PUSCH-ConfigCommon ::=              SEQUENCE {

    groupHoppingEnabledTransformPrecoding   ENUMERATED {enabled}

    pusch-TimeDomainAllocationList        PUSCH-TimeDomainResourceAllocationList

    msg3-DeltaPreamble                INTEGER (-1..6)

    p0-NominalWithGrant               INTEGER (-202..24)

    ...

}



PUSCH-PowerControl ::=            SEQUENCE {

    tpc-Accumulation                ENUMERATED { disabled }

    msg3-Alpha                  Alpha

    p0-NominalWithoutGrant             INTEGER (-202..24)

    p0-AlphaSets                SEQUENCE (SIZE (1..maxNrofP0-PUSCH-AlphaSets)) OF P0-PUSCH-AlphaSet

    pathlossReferenceRSToAddModList    SEQUENCE (SIZE (1..maxNrofPUSCH-PathlossReferenceRSs)) OF PUSCH-

PathlossReferenceRS

    pathlossReferenceRSToReleaseList   SEQUENCE (SIZE (1..maxNrofPUSCH-PathlossReferenceRSs)) OF PUSCH-

PathlossReferenceRS-Id

    twoPUSCH-PC-AdjustmentStates      ENUMERATED {twoStates}

    deltaMCS                   ENUMERATED {enabled}

    sri-PUSCH-MappingToAddModList      SEQUENCE (SIZE (1..maxNrofSRI-PUSCH-Mappings)) OF SRI-PUSCH-

PowerControl

    sri-PUSCH-MappingToReleaseList      SEQUENCE (SIZE (1..maxNrofSRI-PUSCH-Mappings)) OF SRI-PUSCH-

PowerControlId

    }
```

Through a method as described above, a terminal may determine or calculate PUSCH transmission power and transmit a PUSCH by using determined or calculated PUSCH transmission power.

Hereinafter, for convenience of a description, a power control method is described based on a case in which a terminal performs PUCCH transmission. Of course, a corresponding method may be extended and applied to other uplink control channel supported in a wireless communication system.

Specifically, when a terminal performs PUCCH transmission in an active UL BWP (b) of a carrier (f) of a primary cell (or a secondary cell)(c) by using a PUCCH power control adjustment state based on index 1, a terminal may determine PUCCH transmission power $P_{PUCCH,b,f,c}(i,q_u,q_d,l)$(dBm) at a PUCCH transmission occasion(i) based on the following Equation 4.

【Equation 4】

$$P_{\text{PUCCH},b,f,c}(i,q_u,q_d,l) = \min \begin{cases} P_{\text{CMAX},f,c}(i), \\ P_{\text{O\_PUCCH},b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{cases}$$

In Equation 4, q_d represents an index for an open-loop power control parameter (e.g., Po, etc.) and up to 8 parameter values may be configured per cell. Index q_d represents an index of a DL RS resource for pathloss (PL) measurement (e.g., $PL_{b,f,c}(q_d)$) and up to 4 measured values may be configured per cell. Index 1 represents an index for a closed-loop power control process and up to 2 processes may be configured per cell.

Specifically, as Po (e.g., $P_{O\_PUCCH,b,f,c}(q_u)$) is a parameter which is broadcast as part of system information, it may represent target reception power from reception. A corresponding Po value may be configured by considering throughput of a terminal, capacity of a cell, noise and/or interference, etc. In addition, $P_{CMAX,f,c}(i)$ may represent configured UE transmit power. In an example, the configured UE transmit power may be interpreted as 'configured maximum UE output power' defined in 3GPP TS 38.101-1 and/or TS38.101-2. In addition, $M_{RB,b,f,c}^{PUCCH}(i)$ may represent bandwidth of PUCCH resource allocation expressed as the number of resource blocks (RB) for a PUCCH transmission occasion based on a subcarrier spacing ($\mu$). In addition, a delta function (e.g., $\Delta_{F\_PUCCH}(F)$, $\Delta_{TF,b,f,c}(i)$) may be configured by considering a PUCCH format (e.g., PUCCH formats 0, 1, 2, 3, 4, etc.). In addition, $g_{b,f,c}(i,1)$ related to a PUCCH power control adjustment state may be configured or indicated based on a TPC command field of DCI (e.g., DCI format 1_0, DCI format 1_1, DCI format 2_2, etc.) received or detected by a terminal.

In this case, a specific RRC parameter (e.g., PUCCH-SpatialRelationInfo, etc.) and/or a specific MAC-CE command (e.g., PUCCH spatial relation Activation/Deactivation, etc.) may be used to activate or deactivate a linkage between a PUCCH resource and the above-described index q_u, q_d, I. In an example, a PUCCH spatial relation Activation/Deactivation command in MAC-CE may activate or deactivate a linkage between a PUCCH resource and the above-described index q_u, q_d, I based on a RRC parameter, PUCCH-SpatialRelationInfo. In other words, the above-described index q_u, q_d, l, etc. may be associated with a beam, a panel and/or a spatial domain transmission filter, etc. based on specific information. Thereby, PUCCH transmission power control in a unit of a beam, a panel and/or a spatial domain transmission filter may be performed.

Parameters and/or information for the above-described PUCCH power control may be configured individually (i.e., independently) per BWP. In this case, corresponding parameters and/or information may be configured or indicated by higher layer signaling (e.g., RRC signaling, MAC-CE, etc.) and/or DCI, etc. In an example, a parameter and/or information for PUCCH power control may be transmitted through RRC signaling PUCCH-ConfigCommon, PUCCH-PowerControl, etc. and PUCCH-ConfigCommon, PUCCH-PowerControl may be configured as in the following table 14.

【Table 14】

```
PUCCH-ConfigCommon ::=          SEQUENCE {
    pucch-ResourceCommon          INTEGER (0..15)
    pucch-GroupHopping            ENUMERATED { neither, enable, disable },
    hoppingId             INTEGER (0..1023)
    p0-nominal            INTEGER (-202..24)
    ...
}
```

```
PUCCH-PowerControl ::=          SEQUENCE {
    deltaF-PUCCH-f0             INTEGER (-16..15)
    deltaF-PUCCH-f1             INTEGER (-16..15)
    deltaF-PUCCH-f2             INTEGER (-16..15)
    deltaF-PUCCH-f3             INTEGER (-16..15)
    deltaF-PUCCH-f4             INTEGER (-16..15)
    p0-Set                      SEQUENCE (SIZE (1..maxNrofPUCCH-P0-PerSet)) OF P0-PUCCH
    pathlossReferenceRSs            SEQUENCE (SIZE (1..maxNrofPUCCH-PathlossReferenceRSs)) OF PUCCH-
PathlossReferenceRS
    twoPUCCH-PC-AdjustmentStates     ENUMERATED {twoStates}
    ...
}


P0-PUCCH ::=                SEQUENCE {
    p0-PUCCH-Id             P0-PUCCH-Id,
    p0-PUCCH-Value             INTEGER (-16..15)
}


P0-PUCCH-Id ::=               INTEGER (1..8)


PUCCH-PathlossReferenceRS ::=         SEQUENCE {
    pucch-PathlossReferenceRS-Id          PUCCH-PathlossReferenceRS-Id,
    referenceSignal              CHOICE {
        ssb-Index                SSB-Index,
        csi-RS-Index                NZP-CSI-RS-ResourceId
    }
}
```

Through a method as described above, a terminal may determine or calculate PUCCH transmission power and transmit a PUCCH by using determined or calculated PUCCH transmission power.

Regarding transmission of a sounding reference signal (SRS) in an activated UL BWP of a carrier f of a serving cell c, a terminal may calculate a linear power value of transmit power determined by Equation 5 below. Thereafter, a terminal may control transmit power by equally dividing the calculated linear power value for antenna port(s) configured for an SRS.

Specifically, when a terminal perform SRS transmission in an activated UL BWP b of a carrier f of a serving cell c by using an SRS power control adjustment state based on an index 1, the terminal may determine the SRS transmission power $P_{SRS,b,f,c}(i,q_s,l)$(dBm) at an SRS transmission occasion i based on Equation 5 below.

【Equation 5】

$$P_{SRS,b,f,c}(i,q_s,l) = \min \left\{ \begin{array}{l} P_{CMAX,f,c}(i), \\ P_{O\_SRS,b,f,c}(q_s) + 10\log_{10}(2^{\mu} \cdot M_{SRS,b,f,c}(i)) + \alpha_{SRS,b,f,c}(q_s) \cdot PL_{b,f,c}(q_d) + h_{b,f,c}(i,l) \end{array} \right\}$$

In Equation 5, q_s represents an index for an open-loop power control parameter (e.g., Po, alpha (α), a DL RS resources for path loss (PL) measurements (e.g., $PL_{b,f,c}(q_d)$), etc.), and may be configured for each SRS resource set.

Index 1 represents an index for a closed loop power control process, and a corresponding index may be configured independently of or in association with a PUSCH. If SRS power control is not associated with a PUSCH, a maximum number of closed loop power control processes for an SRS may be one.

Specifically, Po (e.g., $P_{O\_SRS,b,f,c}(q_s)$) is a parameter which is broadcasted as part of system information and may indicate target received power at a receiving side. The corresponding Po value may be configured in consideration of terminal throughput, cell capacity, noise and/or interference. In addition, alpha (e.g., $\alpha_{SRS,b,f,c}(q_s)$) may indicate a ratio for performing compensation for path loss. Alpha may be configured to a value from 0 to 1, and full pathloss compensation or fractional pathloss compensation may be performed according to the configured value. In this case, the alpha value may be configured in consideration of interference between terminals and/or data rate. In addition, $P_{CMAX,f,c}(i)$ may indicate the configured terminal transmission power. As an example, the configured terminal transmit power may be interpreted as 'configured maximum UE output power' defined in 3GPP TS 38.101-1 and/or TS38.101-2. In addition, $M_{SRS,b,f,c}(i)$ may indicate a bandwidth of SRS resource allocation expressed as a number of resource blocks (RBs) for an SRS transmission occasion based on subcarrier spacing ($\mu$). In addition, $h_{b,f,c}(i,l)$ related to an SRS power control adjustment state may be configured or indicated based on a TPC command field of DCI (e.g. DCI format 2_3, etc.) received or detected by a terminal and/or RRC parameter (e.g., srs - PowerControlAdjustmentStates, etc.).

A resource for SRS transmission may be applied as a reference for a base station and/or a terminal to determine a beam, panel, and/or spatial domain transmission filter, considering this point, SRS transmit power control may be performed in units of beams, panels, and/or space domain transmit filters.

Parameters and/or information for the above-described SRS power control may be individually (i.e., independently) configured for each BWP. In this case, the corresponding parameters and/or information may be configured or indicated through higher layer signaling (e.g., RRC signaling, MAC-CE, etc.) and/or DCI. As an example, parameters and/or information for SRS power control may be transmitted through RRC signaling, such as SRS-Config, SRS-TPC-CommandConfig, etc., and SRS-Config and SRS-TPC-CommandConfig are configured as shown in Table 15 below.

【Table 15】

```
SRS-Config ::=                    SEQUENCE {
    srs-ResourceSetToReleaseList        SEQUENCE (SIZE(1..maxNrofSRS-ResourceSets)) OF SRS-ResourceSetId
    srs-ResourceSetToAddModList         SEQUENCE (SIZE(1..maxNrofSRS-ResourceSets)) OF SRS-ResourceSet
    srs-ResourceToReleaseList           SEQUENCE (SIZE(1..maxNrofSRS-Resources)) OF SRS-ResourceId
    srs-ResourceToAddModList            SEQUENCE (SIZE(1..maxNrofSRS-Resources)) OF SRS-Resource
    tpc-Accumulation                    ENUMERATED {disabled}
    ...
}


SRS-ResourceSet ::=               SEQUENCE {
    srs-ResourceSetId                   SRS-ResourceSetId,
    srs-ResourceIdList                  SEQUENCE (SIZE(1..maxNrofSRS-ResourcesPerSet)) OF SRS-ResourceId
    resourceType                        CHOICE {
        aperiodic                       SEQUENCE {
            aperiodicSRS-ResourceTrigger        INTEGER (1..maxNrofSRS-TriggerStates-1),
            csi-RS                      NZP-CSI-RS-ResourceId
            slotOffset                  INTEGER (1..32)
            ...,
            [[
            aperiodicSRS-ResourceTriggerList-v1530      SEQUENCE (SIZE(1..maxNrofSRS-TriggerStates-2))
                                        OF INTEGER (1..maxNrofSRS-TriggerStates-1)
```

```
            ]]
         },
         semi-persistent              SEQUENCE {
            associatedCSI-RS              NZP-CSI-RS-ResourceId

            ...

         },
         periodic              SEQUENCE {
            associatedCSI-RS              NZP-CSI-RS-ResourceId

            ...

         }
      },
      usage              ENUMERATED {beamManagement, codebook, nonCodebook, antennaSwitching},
      alpha              Alpha
      p0              INTEGER (-202..24)
      pathlossReferenceRS              CHOICE {
         ssb-Index              SSB-Index,
         csi-RS-Index              NZP-CSI-RS-ResourceId
      }
      srs-PowerControlAdjustmentStates      ENUMERATED { sameAsFci2, separateClosedLoop}

      ...

   }



SRS-TPC-CommandConfig ::=              SEQUENCE {
   startingBitOfFormat2-3              INTEGER (1..31)
   fieldTypeFormat2-3              INTEGER (0..1)

   ...,
   [[
   startingBitOfFormat2-3SUL-v1530    INTEGER (1..31)
   ]]
}
```

Through the method described above, a terminal may determine or calculate SRS transmission power, and may transmit an SRS using the determined or calculated SRS transmission power.

When a terminal performs PRACH transmission in an activated UL BWP b of a carrier f of a serving cell c, the terminal may determine PRACH transmission power $P_{\text{PRACH},b,f,c}(i)$(dBm) at a PRACH transmission occasion i based on Equation 6 below.

【Equation 6】

$$P_{\text{PRACH},b,f,c}(i) = \min\left\{ P_{\text{CMAX},f,c}(i), P_{\text{PRACH,target},f,c} + PL_{b,f,c} \right\}$$

In Equation 6, $P_{\text{CMAX},f,c}(i)$ may represent the configured terminal transmit power. As an example, the configured UE transmit power may be interpreted as 'configured maximum UE output power' defined in 3GPP TS 38.101-1 and/or TS38.101-2. In addition, $P_{\text{PRACH.target},f,c}$ indicates PRACH target reception power provided through higher layer signaling (e.g., RRC signaling, MAC-CE, etc.) for an activated UL BWP. In addition, $PL_{b,f,c}$ represent path loss for an activated UL BWP and may be determined based on a DL RS associated with PRACH transmission in an activated DL BWP of a serving cell c. For example, a terminal may determine path loss associated with PRACH transmission based on a synchronization signal (SS)/physical broadcast channel (PBCH) block associated with PRACH transmission.

Parameters and/or information for PRACH power control described above may be individually (i.e., independently) set for each BWP. In this case, the corresponding parameters and/or information may be configured or indicated through higher layer signaling (e.g., RRC signaling, MAC-CE, etc.). As an example, parameters and/or information for PRACH power control may be transmitted through RRC signaling, such as RACH-ConfigGeneric, and RACH-ConfigGeneric may be configured as shown in Table 16 below.

【Table 16】

```
RACH-ConfigGeneric ::=            SEQUENCE {
    prach-ConfigurationIndex          INTEGER (0..255),
    msg1-FDM                          ENUMERATED {one, two, four, eight},
    msg1-FrequencyStart               INTEGER (0..maxNrofPhysicalResourceBlocks-1),
    zeroCorrelationZoneConfig         INTEGER(0..15),
    preambleReceivedTargetPower       INTEGER (-202..-60),
    preambleTransMax                  ENUMERATED {n3, n4, n5, n6, n7, n8, n10, n20, n50, n100, n200},
    powerRampingStep                  ENUMERATED {dB0, dB2, dB4, dB6},
    ra-ResponseWindow                 ENUMERATED {sl1, sl2, sl4, sl8, sl10, sl20, sl40, sl80},

    ...

}
```

Through the method described above, a terminal may determine or calculate PRACH transmit power, and may transmit a PRACH using the determined or calculated PRACH transmit power.

Power Headroom (PH) Reporting Procedures

A power headroom report (PHR) can be triggered when a specific event occurs.

If an uplink transmission resource for a new transmission is allocated in a MAC entity of a UE, the UE may transmit a power headroom and/or $P_{CMAX}$ corresponding to Type 1 PHR, Type 2 PHR, and/or Type 3 PHR to a base station in a MAC-CE.

A physical layer of the UE may use information previously received from the base station to transmit value(s) for Type 1/2/3 PHR (e.g., power headroom(s) and/or $P_{CMAX}$(s)) to the MAC layer. The MAC layer of the UE may forward/report value(s) (e.g., power headroom(s) and/or $P_{CMAX}$(s)) received (i.e., forwarded) from the physical layer to the base station via MAC-CE (e.g., single entry PHR MAC CE or multiple entry PHR MAC CE).

When transmitting/forwarding/reporting (via MAC CE) the value(s) related to the PHR discribed in the present disclosure (e.g., all PHR-related value(s) including variations of the values in addition to PH and/or virtual PH and/or $P_{CMAX}$) it can be interpreted that they are transmitted/forwarded/reported leveled to N bits (i.e., N=6).

Uplink Transmission Method for an uplink reception Point (UL Rx Point)

In existing wireless communication systems, operations for uplink transmission and downlink reception of a UE based on multiple Transmission Reception Points (M-TRPs) and uplink reception and downlink transmission of a base station are defined. These M-TRP operations may include single-DCI (S-DCI)-based M-TRP operations, in which a specific TRP transmits control signals to the UE, and multi-DCI (M-DCI)-based M-TRP operations, in which multiple TRPs all transmit control signals to the UE. In improved wireless communication systems, one or more additional uplink reception points (or uplink receptiononly points, hereinafter, UL Rx points) deployed in a macro cell are being discussed to compensate for uplink coverage of the UE.

In order to reduce base station installation costs, this UL Rx point can be implemented to perform only UL reception without a DL transmission chain. In this case, since the UL Rx point cannot transmit a DL reference signal (RS), the UE cannot know the DL slot boundary (or reference point) for applying TA to the UL Rx point. In addition, since the UL Rx point does not transmit SSB, the existing SSB-based RACH procedure cannot be applied as is to the RACH procedure for acquiring TA related to the timing of UL transmission to the UL Rx point of the UE. In addition, in the existing wireless communication system, a pathloss reference RS (hereinafter, PL-RS) is configured as an open-loop parameter for UL power control, but since the UL Rx point does not perform DL transmission, the DL RS to be used as the PL-RS cannot be configured for the UE. Furthermore, even if the UE has the capability for beam correspondence, for a UL Rx point that does not transmit a DL RS, the DL RS cannot be configured as a reference RS for the UL transmission beam of the UE, so there is a problem that the optimal UL transmission beam for the UL Rx point must be found through the UL beam management operation of the UE.

Hereinafter, various examples of a UE performing uplink transmission to multiple Rx points (e.g., a macro cell and/or an UL Rx point) within a specific CC/BWP(s) are described.

In the present disclosure, defining information/values may mean that the base station and the UE have prior knowledge of the information/values without signaling/indication between the base station and the UE regarding the information. In the present disclosure, configuring information/values to the UE may mean that the base station provides the information/values to the UE via higher-layer (e.g., L3) signaling. In the present disclosure, indicating information/values to the UE may mean that the base station provides the information/values to the UE via L2/L1 signaling, such as MAC CE or DCI.

In addition, the scope of the present disclosure is not limited by the names macro cell and UL Rx point in the following description. For example, in the present disclosure, a macro cell is used as a term representing a base station or cell that supports both DL and UL transmission/reception, and a UL Rx point (or Rx-only point, or UL TRP) may be used as a term representing a base station or cell that supports only UL reception. For example, a UL Rx point may correspond to a radio remote head (RRH), or functionally, a macro cell may correspond to a central unit (CU) and a distributed unit (DU), or a DU may correspond and a UL Rx point corresponds to a radio unit (RU). In addition, it can be assumed that the macro cell and the UL Rx point are connected by an ideal backhaul so that there is almost no delay in information exchange between the two.

Hereinafter, various embodiments of operation methods for a macro cell and a UL Rx point according to the present disclosure are described.

Embodiment 1

This embodiment relates to the operation of a macro cell (e.g., a first network node) and a UL Rx point (e.g., a second network node) and an operation method of a UE.

The UL Rx point between a base station and a UE may be operated or managed based on one or more of the following embodiments 1-1 to 1-4.

Embodiment 1-1

Different frequency domain resources and/or time domain resources may be allocated to the macro cell and the UL Rx point.

Embodiment 1-1-1

The base station may allocate different frequency resources for the macro cell uplink and the UL Rx point uplink.

For example, the base station can configure the macro cell uplink and the UL Rx point uplink for the same UL BWP and allocate independent (or different) frequency resources within the UL BWP. In the following description, "independent" or "separate" means distinct, but may or may not be the same.

Alternatively, the base station can configure the macro cell uplink and the UL Rx point uplink for different UL BWPs. That is, power control, timing advance, uplink beam-related parameters/resources, etc. can be configured independently (or differently) for the different UL BWPs.

Additionally or alternatively, the base station can utilize a specific supplementary UL (SUL) carrier for the UL Rx point uplink.

Accordingly, for uplink transmission to a UL Rx point physically located different from the macro cell, power control, timing advance, uplink beam-related parameters/resources, etc. can be separately configured/managed.

Embodiment 1-1-2

The base station can allocate different time resources for the macro cell uplink and the UL Rx point uplink.

For example, in a downlink/uplink/flexible slot configuration pattern configured through higher-layer signals such as TDD-UL-DL-ConfigCommon or/and TDD-UL-DL-ConfigDedicated, information indicating that certain slots among the uplink slots (and/or flexible slots) are utilized for the macro cell and the remaining slots are utilized for the UL Rx point can be transmitted to the UE through higher-layer signals (e.g., RRC or MAC CE). TDD-UL-DL-ConfigCommon or/and TDD-UL-DL-ConfigDedicated can be utilized to transmit this information.

Accordingly, depending on which time resource the base station allocates as an uplink resource to which target (i.e., depending on whether the uplink resource is allocated to a macro cell or a UL Rx point), the UE can perform uplink transmission based on different power control, timing advance, uplink beam-related parameters, etc. for the distinct uplink resources.

### Embodiment 1-2

The base station may separately configure the UL channel/signal for the macro cell and the UL channel/signal for the UL Rx point when configuring each UL channel/signal (e.g., including PRACH, PUCCH, PUSCH, and/or SRS), or may independently (or differently) configure {power control, timing advance, uplink beam}-related parameters for each UL channel/signal.

For example, this embodiment may also be applied assuming that the aforementioned embodiment 1-1 does not apply (i.e., when the same frequency/time domain resources are used for the macro cell and the UL Rx point).

### Embodiment 1-2-1

UL channels/signals (e.g., resources/resource sets of UL channels/signals) for the macro cell and UL channels/signals (e.g., resources/resource sets of UL channels/signals) for the UL Rx point may be configured separately.

For example, PUCCH resources for the macro cell and PUCCH resources for the UL Rx point may be configured separately.

Additionally or alternatively, a codebook-based (CB)/non-codebook-based (NCB) SRS resource set for the macro cell and a CB/NCB SRS resource set for the UL Rx point may be configured separately. Accordingly, PUSCH transmission scheduling for a macro cell and PUSCH transmission scheduling for a UL Rx point can be distinguished through the SRI (SRS resource indicator) field and/or code point distinction of the SRI field in the DCI.

Additionally or alternatively, a set of SRS resources/SRS resources may be configured for each target (e.g., a macro cell and an UL Rx point), thereby distinguishing PUSCH transmission for the macro cell from PUSCH transmission for the UL Rx point.

Additionally or alternatively, a CG (configured grant) PUSCH resource may be configured for each target (e.g., a macro cell and an UL Rx point), thereby distinguishing CG PUSCH transmission scheduling for the macro cell from CG PUSCH transmission scheduling for the UL Rx point.

Additionally or alternatively, PRACH resources for the macro cell and PRACH resources for the UL Rx point may be configured independently (or differently).

### Embodiment 1-2-2

UL channel/signal-related parameters (e.g., power control (PC), timing advance (TA), and uplink beam-related parameters) for the macro cell and UL channel/signal-related parameters (e.g., PC, TA, and uplink beam-related parameters) for the UL Rx point can be configured independently (or differently). That is, for resources for the same UL channel/signal, the PC/TA/beam-related parameters for the macro cell and the PC/TA/beam-related parameters for the UL Rx point can be configured differently.

For example, for the same PUCCH resource, multiple (e.g., two) PC/TA/beam-related parameters can be configured/indicated for the macro cell and the UL Rx point. That is, the UE can utilize a specific parameter among multiple uplink transmission parameters depending on whether the transmission target is the macro cell or the UL Rx point. Additionally or alternatively, if the plurality of transmission parameters are configured/indicated by the base station to simultaneously transmit the resources configured/indicated to the macro cell and the UL Rx point, the UE may utilize each transmission parameter to simultaneously transmit the resources to the macro cell and the UL Rx point.

### Embodiment 1-3

The base station can configure the macro cell and the UL Rx point to be associated with different CORESET pool indices. Accordingly, the PC/TA/beam-related parameters/resources associated with the first CORESET pool index are distinct from the PC/TA/beam-related parameters/resources associated with the second CORESET pool index, so that transmission parameters can be independently (or differently) configured/applied for each target (i.e., the macro cell and the UL Rx point). For example, power control, timing advance, and uplink beam-related parameters/resources can be separately configured/managed (by CORESET pool index) for uplink transmission to a UL Rx point physically located different from the macro cell.

For example, the present embodiment may be applied when the uplink for the macro cell and the uplink for the UL Rx point are allocated within the same UL BWP.

Embodiment 1-3-1

When the macro cell and the UL Rx point are configured to be associated with different CORESET pool indices, the UE can be configured to perform only uplink transmission for the CORESET pool index associated with the UL Rx point.

For example, in M-DCI-based M-TRP operation, only uplink transmission can be configured/indicated for a specific CORESET pool index. In this case, similar to the configuration of two CB/NCB SRS resource sets in the M-TRP STxMP (simultaneous transmission across multi-panel) PUSCH transmission scheme, the CB/NCB SRS resource set for the macro cell and the CB/NCB SRS resource set for the UL Rx point can be configured separately (i.e., two distinct CB/NCB SRS resource sets can be configured for the UE). Accordingly, there may be a one-to-one association between a CB/NCB SRS resource set for a macro cell and a specific CORESET pool index (e.g., a first CORESET pool index), and there may be a one-to-one association between a CB/NCB SRS resource set for a UL Rx point and another specific CORESET pool index (e.g., a second CORESET pool index).

During PUSCH scheduling, the target of uplink transmission (i.e., the macro cell or the UL Rx point) may vary depending on which of the two SRS resource sets is associated with the SRI indication included in the UL grant DCI. Accordingly, power control, timing advance, and uplink beam-related parameters for uplink transmission may be applied differently for each target. In addition, when the base station is configured/indicated to simultaneously transmit PUSCH to the macro cell and the UL Rx point by indicating both SRIs related to the two SRS resource sets (i.e., two SRIs) by utilizing multiple SRI indications through the UL grant DCI, the UE may simultaneously transmit the corresponding PUSCH to the macro cell and the UL Rx point by utilizing each transmission parameter.

In case of PUCCH/SRS, power control, timing advance, and uplink beam related parameters for the macro cell and/or UL Rx point may be applied during UE uplink transmission depending on which one or more CORESET pool indices (or which one or more CB/NCB SRS resource sets) the resource is associated with.

Embodiment 1-3-2

Similar to the PUSCH repetition scheme in S-DCI based M-TRP operation (assuming that the uplink for the macro cell and the uplink for the UL Rx point are allocated within the same UL BWP as described above), a CB/NCB SRS resource set for the macro cell and a CB/NCB SRS resource set for the UL Rx point may be separately configured without configuring a CORESET pool index. In this case, since the two SRS resource sets have a one-to-one correspondence with a specific PUSCH TO (transmission occasion) group during PUSCH repetition transmission, the UE can perform PUSCH repetition transmission for the macro cell and the UL Rx point as the base station schedules PUSCH repetition transmission.

For example, in the first TO group, PUSCH repeated transmission may be performed for the macro cell, and in the second TO group, PUSCH repeated transmission may be performed for the UL Rx point. Here, transmission may be performed for the S-TRP (i.e., either the macro cell or the UL Rx point) according to the SRI indication (or by the SRS resource set indicator field). For each TO group, the UE may utilize specific parameters associated with the corresponding target/SRS resource set among uplink transmission parameters (e.g., power control, timing advance, uplink beam-related parameters) related to multiple SRS resource sets depending on whether the transmission target is the macro cell or the UL Rx point (or depending on which SRS resource set-related SRI, TPMI is indicated).

In the case of PUCCH/SRS, macro cell-specific or UL Rx point-specific power control, timing advance, and uplink beam-related parameters may be applied during UE uplink transmission depending on which CB/NCB SRS resource set the resource is associated with.

Embodiment 1-4

The base station can configure the macro cell and the UL Rx point to be associated with different joint and/or separate (UL) TCI states in a unified TCI framework. In this case, since information related to power control, timing advance, and transmission beam is configured in the different joint/separate (UL) TCI states, the base station can distinguish whether the target of the uplink transmission of the UE is the macro cell or the UL Rx point depending on which joint/separate (UL) TCI state it utilizes for the uplink transmission.

For example, in an extension of the integrated TCI state for M-TRP operation, the number of receive and transmit common beams may be extended to two for TRP-specific common beam management, and these two indicated TCI states (i.e., joint TCI state and/or split UL TCI state) may be applied to uplink transmission for a macro cell and a UL Rx point.

Embodiment 2

This embodiment relates to a method for obtaining TA of a UE for a UL Rx point.

In the examples of Embodiment 1 described above, HARQ process IDs can be defined/configured for the macro cell and the UL Rx point, respectively. In this way, power control, TA, and transmission beam-related parameters for uplink transmission can be applied to each of the HARQ process IDs for the macro cell and the UL Rx point, respectively. Even if it is assumed that the macro cell and the UL Rx point are connected through an ideal backhaul, considering that it is difficult to actually implement soft combining of uplink signals received from the UE at the macro cell and the UL Rx point in the decoding fronthaul due to the complexity, it may be appropriate to distinguish transmission-related parameters through a separate HARQ process for each target.

As described above, the UL Rx point can only perform UL reception without a DL Tx chain to reduce base station installation costs. Therefore, there is a limitation that DL RS transmission cannot be performed to the UE. Consequently, the UE cannot measure/determine the DL slot boundary (or reference point) for TA application during uplink transmission to the UL Rx point. Furthermore, since there is no SSB transmission from the UL Rx point, there is no reference information for random access preamble selection and/or random access preamble transmission timing during RACH/PRACH transmission for TA acquisition, resulting in uncertainty in UE operation.

Hereinafter, various examples of the present disclosure related to obtaining timing advance information for the UL Rx point for uplink transmission by the UE to the UL Rx point are described.

Embodiment 2-1

This embodiment relates to the definition or configuration of a reference point for applying a timing advance (TA) value (e.g., the value of the N_TA and/or N_TA,offset parameters) after a UE obtains a timing advance (TA) for a UL Rx point. The reference point may correspond to the boundary of a downlink radio frame for applying the TA value.

Embodiment 2-1-1

The UE may expect the reference point of the UL Rx point to be identical to the DL reference point of the macro cell. Additionally or alternatively, a constraint may be applied in the base station deployment/implementation that the DL reference point of the macro cell and the UL Rx point be identical. In this case, the reference point definition for a specific cell (e.g., SpCell/SCell) of the UE as described below may be applied to the UL Rx point.

Regarding UE transmission timing, the UE may have the capability to follow frame timing changes of the reference cell when transmitting a PUSCH on a configured grant (CG) resource for small data transmission (SDT) in an RRC connected state or an RRC inactive state. As described above, uplink frame transmission may be performed at a time point $(N_{TA} + N_{TA.offset})*T_c$ before the reception time of the first detected path (in time) of the corresponding downlink frame from the reference cell. For the serving cell(s) of the PTAG, the UE may use the SpCell as a reference cell to derive the transmission timing for the cells of the PTAG. For the serving cell(s) of the STAG, the UE may use any of the activated SCells as a reference cell to derive the transmission timing for the cells of the STAG. The initial transmission timing accuracy and gradual timing adjustment requirements of the UE may be defined.

Embodiment 2-1-2

To define the reference point of the UL Rx point, an offset value between the reference point of the UL Rx point and the DL reference point of the macro cell may be configured/indicated from the base station to the UE. This may be applied when there is a reference point difference between the macro cell and the UL Rx point, or an offset value of 0 may be configured/indicated even when there is no difference. When multiple UL Rx points are associated with a single macro cell, the offset value may be configured/indicated separately (or differently) for each of the multiple UL Rx points.

For example, the offset value may be expressed by the $N_{TA}$ value of the TA command as described above (where, indicated by the index values of $T_A$=0, 1, 2, ..., 3846), or by (a multiple of) $T_A$=0, 1, 2, ..., 63 in the relative TA command as described above.

As another example, the offset value may be predefined as a specific value (e.g., a positive/negative real number), and one of the predefined values may be configured/indicated to the UE as an offset value related to the reference point of the UL Rx point.

Regarding the term "reference point," since DL radio frames do not exist or are not defined for the UL Rx point, the reference point for the UL Rx point may be defined as a UL reference point, a virtual point, or a virtual reference point instead of the term "DL reference point."

Embodiment 2-1-3

To define the reference point for the UL Rx point, an $N_{TA,offset}$ value for the UL Rx point may be defined/configured. The $N_{TA,offset}$ parameter for the UL Rx point may be defined/configured as a parameter distinct from the $N_{TA,offset}$ parameter for the macro cell. This may be applied when there is a difference in reference points between the macro cell and the UL Rx point, or even when there is no difference, the same $N_{TA,offset}$ value as the macro cell may be defined/configured. When multiple UL Rx points are associated with a single macro cell, the $N_{TA,offset}$ parameter may be set/indicated separately (or differently) for each UL Rx point.

The $N_{TA,offset}$ parameter for the macro cell (i.e., the existing) corresponds to a TDD/FDD band-specific value and is either predefined or signaled to the UE by the base station configuration. The $N_{TA,offset}$ parameter for a distinct UL Rx point may be set for the UE by the base station and/or predefined.

In the aforementioned embodiment 2-1, the base station can signal to the UE whether one of embodiments 2-1-1, 2-1-2, and 2-1-3 is applied depending on whether there is a difference in reference points between the macro cell and the UL Rx point. For example, in embodiments 2-1-2 and 2-1-3, the base station can signal to the UE information regarding the timing at which an offset value or $N_{TA,offset}$ value for (multiple) UL Rx points is applied.

Embodiment 2-2

This embodiment relates to a method for obtaining a TA for a UL Rx point of a UE and a method for indicating/updating a TA for a UL Rx point. In the examples below, for managing the TA value for the UL Rx point, the TA value for the UL Rx point may be managed as a different TAG from the macro cell, or may be managed through a predetermined offset value for the TA value of the macro cell.

Embodiment 2-2-1

Similar to embodiment 2-1, if a reference point for uplink transmission for a UL Rx point is defined/configured, the UE can transmit uplink transmission for the configured/indicated UL Rx point based on the reference point. In this case, the base station may not perform a separate operation for obtaining TA of the UE. Thereafter, the base station can provide a TA command for the UL Rx point by utilizing an absolute/relative TA command (e.g., MAC CE) to correct the TA value for the UL Rx point of the UE.

Example 2-2-2

A UE may transmit a RACH/PRACH to a UL Rx point. For example, the RACH/PRACH may be transmitted to the UL Rx point based on a PDCCH order. The PDCCH order may be provided to the UE from a macro cell. After receiving the RACH/PRACH at the UL Rx point, the base station may indicate a TA value for the UL Rx point to the UE through an RAR (e.g., an absolute TA command field included in the RAR) transmitted from the macro cell to the UE. That is, an RAR responsive to a RACH/PRACH transmitted to the UL Rx point may be received from the macro cell. For example, the RAR may be received through a CORESET associated with a Type-1 CSS (common search space).

In this regard, applying a PL (path loss) offset to a PRACH transmitted to a UL Rx point based on a PDCCH order may be supported. Determining a DL reference timing for a PRACH transmission to a UL Rx point based on a PDCCH order may be based on a DL RS as defined previously. For example, a DL RS such as an SSB and/or CSI-RS of a macro cell may be applied as a PL reference RS for the UL Rx point. In addition, with respect to the indication of a PL offset for a PRACH transmission based on a PDCCH order, a PL offset associated with a joint/UL TCI state indicated for the UL Rx point in the unified TCI framework may be applied to the PDCCH order-based PRACH transmission.

Specifically, since the UL Rx point does not transmit SSB, it is required to solve the problem that it is difficult to control power and configure transmission beam information for RACH/PRACH transmission. To this end, i) the base station may indicate the UE to utilize RACH/PRACH resources related to the SSB by indicating the UE to utilize a specific SSB of the macro cell through a PDCCH order, and further, the UE may apply the SSB as a transmission beam RS and/or PL RS (or PL reference RS) and transmit RACH/PRACH based thereon. Alternatively, ii) the base station may indicate the UE to utilize RACH/PRACH resources related to the SSB by indicating the UE to utilize a specific SSB of the macro cell through a PDCCH order, and the UE may apply a transmission beam RS and/or PL RS determined in a different manner instead of the SSB of the macro cell and transmit RACH/PRACH based thereon. Alternatively, iii) the UE may be allowed to apply a transmission beam RS and/or PL RS determined in a different manner without the base station's indcation on the SSB. For example, for a RACH/PRACH transmission beam determined in a different manner, a beam management SRS transmitted by the UE in advance may be utilized as a reference RS of the RACH/PRACH transmission beam.

Various examples of transmission beam/PL RS application for RACH/PRACH transmission (e.g., i), ii) and/or iii) described above) may be selectively applied (e.g., switched/controlled) by the base station. For example, when the base station transmits a PDCCH order to the UE that triggers RACH/PRACH transmission for the UL Rx point, information indicating whether the UE transmits the RACH/PRACH based on the UE's reception beam for the SSB of the macro cell (e.g., example i) described above) or whether the UE transmits the RACH/PRACH based on a beam direction different from the UE's reception beam for the SSB of the macro cell (e.g., example ii) or iii) described above) may be included in the DCI corresponding to the PDCCH order.

After transmitting a random access preamble via RACH/PRACH for a UL Rx point, the QCL assumption applied to reception of a RAR (i.e., a PDCCH/DCI scheduling a PDSCH carrying the RAR, and/or a PDSCH carrying the RAR) in response to the random access preamble may be applied as in the following examples. For example, if RACH/PRACH transmission is performed based on an SSB of a macro cell according to example i) described above, the indicated SSB of the macro cell may be utilized as a QCL RS for RAR reception. Alternatively, if RACH/PRACH transmission is performed based on a transmission beam RS and/or PL RS determined in another manner according to example ii) or iii) described above, the corresponding transmission beam RS and/or PL RS may be utilized as a QCL RS for RAR reception. Additionally or alternatively, the QCL information (or TCI state) configured for the CORESET associated with the type-1 CSS used for receiving RAR (of a macro cell) as described above may also be utilized as the QCL RS for receiving RAR.

When receiving a RAR scheduling PDCCH/DCI after transmitting a RACH/PRACH for a cell supporting both DL and UL, an RA-RNTI applied to monitoring of the corresponding PDCCH/DCI is computed based on a RACH occasion (RO), and the PDCCH/DCI can be received based on the identification information. The RA-RNTI for monitoring of the RAR scheduling PDCCH/DCI in response to a RACH/PRACH/random access preamble transmitted for a UL Rx point can be computed according to the following examples. For example, when RACH/PRACH transmission is performed/triggered based on a specific SSB of a macro cell as in the above-mentioned examples i) or ii), an RA-RNTI may be calculated based on information of RO (e.g., symbol index, slot index, frequency domain index) based on the specific SSB of the macro cell, and an RAR scheduling PDCCH/DCI may be received based thereon. Alternatively, when RACH/PRACH transmission is performed that is not based on a specific SSB as in the above-mentioned example iii), a separate RA-RNTI may be calculated by the UE, and an RAR scheduling PDCCH/DCI may be received based thereon.

The RA-RNTI for the 4-step RACH procedure can be calculated as follows. The RA-RNTI associated with a PRACH occasion in which a random access preamble is transmitted can be calculated according to the mathematical formula RA-RNTI = $1 + s\_id + 14 \times t\_id + 14 \times 80 \times f\_id + 14 \times 80 \times 8 \times ul\_carrier$ id. Here, $s\_id$ is the index of the first OFDM symbol of the PRACH occasion ($0 \leq s\_id < 14$). $t\_id$ is the index of the first slot of the PRACH occasion in the system frame ($0 \leq t\_id < 80$), and the subcarrier spacing for determining $t\_id$ can be based on the subcarrier spacing configuration indices $\mu(=0, 1, 2, 3)$ and $\mu(=5, 6)$. For example, $t\_id$ may correspond to the index of a slot based on 120 kHz subcarrier spacing in the system frame containing a PRACH occasion. $f\_id$ is the index of the PRACH occasion in the frequency domain ($0 \leq f\_id < 8$). $ul\_carrier\_id$ is the index of the UL carrier used for random access preamble transmission, and its value can be 0 for a normal uplink (NUL) carrier and 1 for a supplementary uplink (SUL) carrier. In a 2-step RACH procedure, the MSGB-RNTI associated with a PRACH occasion during which a random access preamble is transmitted can be calculated according to the following equation: MSGB-RNTI = $1 + s\_id + 14 \times t\_id + 14 \times 80 \times f\_id + 14 \times 80 \times 8 \times ul\_carrier\_id + 14 \times 80 \times 8 \times 2$.

The examples of Embodiment 2-2 may also be applied when a UE transmits a RACH/PRACH to perform an initial access. For example, RACH/PRACH information related to a UL Rx point (e.g., a higher layer information element RACH-config including information about RACH resources such as an SSB index, a RACH preamble, and a RACH opportunity) may be included in a specific system information block (SIB). Based on the information included in the SIB, a RACH/PRACH may be transmitted for the UL Rx point when the UE performs an initial access procedure.

Embodiment 2-2-3

A set of SRS resources and/or SRS resources for RACH-like SRS may be separately configured for a UE. The base station may, based on reception of the RACH-like SRS transmitted by the UE, provide the UE with a TA command for the UL Rx point by utilizing an absolute/relative TA command (e.g., MAC CE) to correct a TA value for the UL Rx point of the UE. The specific SRS resources for the aforementioned RACH-like SRS may be configured with time/frequency domain resources of N symbols or more and X kHz bandwidth or more (wherein N and X are each a positive natural number). Accordingly, the base station may solve a problem in which TA acquisition was inaccurate due to insufficient granularity in the existing SRS reception.

Meanwhile, in the present disclosure, when performing uplink transmission for multiple Rx points in a specific CC/BWP(s) of a UE, a power control method for uplink transmission and/or a method for determining an uplink transmission beam are proposed.

Hereinafter, in the description of the present disclosure, using (or mapping) a specific TCI state (or TCI) when receiving data/DCI/UCI for a certain frequency/time/spatial resource means the following. For DL, this may mean estimating a channel from a DMRS using the QCL type and QCL RS indicated by the corresponding DL TCI state in the frequency/time/spatial resource, and receiving/demodulating data/DCI using the estimated channel. For UL, this may mean transmitting/modulating DMRS and data/UCI using the Tx beam and/or Tx power indicated by the corresponding UL TCI state in the frequency/time/spatial resource.

The embodiments proposed below may be applied in combination with the embodiments described above. In particular, the embodiments proposed below may be applied in conjunction with the embodiments 1-4 described above. That is, as in the previous embodiment 1-4, the embodiment proposed below can be applied in a state where the macro cell and the UL Rx point each have different joint/UL TCI states associated/configured.

Embodiment 3

Conventionally, a pathloss reference RS (PL-RS) is configured as one of the open-loop parameters for UL power control. However, as previously explained, since the UL Rx point cannot transmit DL RS, it can be difficult to configure the PL-RS for pathloss compensation in open-loop power control (Problem 2).

In this embodiment, to address Problem 2 above, a method for controlling the power of a UE for uplink transmission to the UL Rx point is proposed.

Embodiment 3-1

The following closed-loop power control may be used to determine the uplink power for a UL Rx point.

A closed-loop index for closed-loop power control associated with a UL Rx point may be configured separately from the macro cell. For example, the closed-loop index may be associated with/mapped to a specific SRS resource indicator (SRI) (field) associated with the UL Rx point (in Proposal 1), associated with/mapped to a specific SRS resource set, associated with/mapped to a specific CORESET pool index, associated with/mapped to a specific TCI state, or associated with/mapped to a specific timing advance group (TAG). In this case, a transmit power control (TPC) (field) command for closed-loop power control associated with the corresponding UL Rx point may include the specific indicator(s). For example, a closed-loop index associated with the UL Rx point may be included in the TPC command, and at least one of an SRI, an SRS resource set, a CORESET pool index, a TCI state, and a TAG associated with the closed-loop index associated with the UL Rx point may also be included in the TPC command.

And/or, the UL Rx point and macro cell may be configured with the same closed-loop index. In this case, TPC indication for the UL Rx point may be performed using DCI scrambled with a separately configured/defined RNTI for the UL Rx point, or a newly defined 1-bit field within the DCI may be used to indicate the target to which TPC is to be applied (whether the macro cell or the UL Rx point).

This operation of performing a TPC command for the UL Rx point, including the aforementioned specific indicator(s) (the aforementioned closed-loop index, an indicator associated with the closed-loop index, or a 1-bit indicator indicating the target), may also be utilized for TPC command operation utilizing group-common DCI (e.g., DCI format 2_3, used for transmitting TPC commands for SRS transmission by one or more UEs).

When a base station performs closed-loop power control for a UL Rx point of a UE, a specific method of a TPC command is proposed.

Table 17 below illustrates the mapping of absolute and accumulated $\beta_{PUSCH,b,f,c \text{ values}}$ or $\beta_{SRS,b,f,c}$ values of the TPC command field in the DCI format 2_2 or in the DCI format 2_3 with CRC scrambled by TPC-PUSCH-RNTI or in the DCI format scheduling the PUSCH transmission.

[Table 17]

| TPC command field | Accumulated $\beta_{PUSCH,b,f,c}$ or $\beta_{SRS,b,f,c}$ [dB] | Absolute $\beta_{PUSCH,b,f,c}$ or $\beta_{SRS,b,f,c}$ [dB] |
|---|---|---|
| 0 | -1 | -4 |
| 1 | 0 | -1 |
| 2 | 1 | 1 |
| 3 | 3 | 4 |

The standard defines power offset values to be applied for uplink power adjustment when the higher layer parameter tpc-Accumulation is activated/enabled (i.e., when the UE has not configured the RRC parameter tpc-Accumulation), as shown in Table 17, and power offset values to be applied for uplink power adjustment when the higher layer parameter tpc-Accumulation is deactivated/disabled (when the UE has configured the RRC parameter tpc-Accumulation), based on the value of the TPC command field.

When the base station executes a TPC command for a closed loop index associated with a UL Rx point, it can use a separate table defining the mapping between the TPC command field value and the power offset value, or can apply a predetermined scaling to Table 17.

For example, instead of a table of power offset values for macro cells (such as Table 17 above), a separate table of power offset values (where the offset value is double or n times (n is a natural number) for macro cells) such as Table 18 below may be utilized.

[Table 18]

| TPC command | Accumulated power adjustment value [dB] | Absolute power adjustment value [dB] |
|---|---|---|
| 0 | -2 | -8 |
| 1 | 0 | -2 |
| 2 | 2 | 2 |
| 3 | 6 | 8 |

In addition, the power offset values for the values of the TPC command field for the closed loop index related to the UL Rx point may be dynamically changed/indicated (e.g., based on the movement of the UE). For example, if it is determined that the UE is moving away from the macro cell and closer to the UL Rx point based on the mobility of the UE, the base station may dynamically change the power offset values for power adjustment of the TPC command field for the closed loop index by decreasing the absolute value from the power offset values for each TPC command field in Table 17 or increasing the number of negative values mapped to each field (e.g., via DCI/MAC-CE). Similarly, if it is determined that the UE is moving away from the UL Rx point while getting closer to the macro cell, the base station can dynamically change the offset values for power adjustment of the TPC command field for the closed loop index by increasing the absolute value from the power offset values for each TPC command field in Table 17 or increasing the number of positive values mapped to each field.

And/or, when the uplink reception level of the UE changes due to UE mobility or/and a change in the transmission beam of the UE, the base station can use the prediction by the AI/ML model to indicate the UE (via DCI/MAC CE) of a power offset correction value at a future uplink transmission time point related to the UL Rx point.

In addition, a method for determining the uplink transmit power of an uplink channel/RS for an initial UL Rx point of a UE in order for a base station to perform closed-loop power control for the UL Rx point of the UE is proposed. In this case, i) (before receiving a closed-loop TPC command from the base station) the UE can transmit the uplink channel/RS with the minimum transmit power. Alternatively, ii) (before receiving a closed-loop TPC command from the base station) the UE can transmit the uplink with the transmit power calculated only by utilizing an open-loop power control parameter of a macro cell for the uplink channel/RS. Alternatively, iii) (before receiving a closed-loop TPC command from the base station) the UE can transmit the uplink with the transmit power calculated only by utilizing P0, using only an open-loop power control parameter of a macro cell for the uplink channel/RS, without performing fractional pathloss compensation by PL-RS. Alternatively, iv) (before receiving the closed-loop TPC command from the base station) the UE can transmit the uplink channel/RS at a specific transmission power according to the base station configuration/definition.

Embodiment 3-2

A method for configuring open-loop power control parameter(s) for a UL Rx point is proposed. A base station can configure/indicate open-loop power control parameter(s) for a UL Rx point of a UE using one or more of the embodiments below.

Alternative 1: The base station can configure PL-RS, among the open-loop power control parameters for the UL Rx point of a UE, using a DL RS associated with a macro cell. Furthermore, the base station can define/configure a new alpha value for the UL Rx point, which is a parameter for fractional pathloss compensation relative to the pathloss value for the PL-RS. In other words, even if the same PL-RS is configured for the macro cell and the UL Rx point, the alpha value can be configured individually (differently).

Here, the alpha value for the UL Rx point may be commonly configured for uplink transmission PUSCH/-PUCCH/SRS/PRACH for the UL Rx point of the UE, or may be configured independently (differently) for each uplink channel/RS. For example, since the UL Rx point may have a shorter radio transmission distance from the UE than the macro cell, the new alpha value may be configured to be smaller than the alpha of the macro cell.

Alternative 2: The base station may configure PL-RS among the open-loop power control parameters for the UL Rx point of the UE with the DL RS associated with the macro cell. In addition, the base station may define/configure the open-loop power control parameter for the UL Rx point by configuring/indicating an offset value of Y [dB] (Y is a positive/negative natural number or 0) compared to the partial path loss compensation value compensated for by the alpha value configured (for each uplink channel/RS) for the macro cell. That is, even if the same PL-RS is configured for the macro cell and the UL Rx point, only the alpha value is configured for the macro cell, but an offset (Y) (which may be referred to as a path loss (PL) offset) may be configured in addition to alpha for the UL Rx point. In this case, the transmission power of the uplink transmission for the UL Rx point may be determined based on a value derived by applying both the alpha value and the offset (Y) (i.e., the PL offset) to the downlink path loss estimation calculated by the UE using the corresponding PL-RS.

Here, the offset (Y) value may be commonly configured for uplink transmission PUSCH/PUCCH/SRS/PRACH for the UL Rx point of the UE, or may be independently (differently) set for each uplink channel/RS. For example, since the UL Rx point may have a shorter radio reach from the UE than the macro cell, the offset (Y) value may be configured to a negative number (e.g., a natural number).

Alternative 3: The base station may perform open-loop power control by newly configuring a P0 value for the UL Rx point (different from the P0 value of the macro cell) (without configuring PL-RS among the open-loop power control parameters for the UL Rx point). And/or, the base station may configure an offset value for the P0 value of the macro cell for the UE to configure the P0 value for the UL Rx point.

Here, the new P0 value or offset value for the UL Rx point may be commonly configurd for the uplink transmission PUSCH/PUCCH/SRS/PRACH for the UL Rx point of the UE or may be independently (differently) configured for each uplink channel/RS.

The correction values of the alternatives (Alt) 1 to 3 (e.g., the new alpha value, the offset (Y) value for alpha, the new P0 value, etc.) for configuring the open-loop power control parameters for the UL Rx point of the UE described above can be dynamically changed (e.g., via MAC CE/DCI) by increasing/decreasing the size of the correction value depending on whether the UE is getting closer/farther away from the UL Rx point. In other words, after the correction values of the alternatives (Alt) 1 to 3 are configured by higher layer signaling, etc., the update of the correction value (e.g., indicating a new correction value or a difference value compared to a preset correction value) can be dynamically performed by lower layer signaling (e.g., via MAC CE/DCI) in consideration of the movement of the UE, etc.

And/or, when the uplink reception level of the UE changes due to UE mobility or/and a change in the transmission beam of the UE, the base station may use the prediction by the AI/ML model to indicate the UE (e.g., via DCI/MAC CE) a correction value at a future uplink transmission time.

The open-loop power control parameter configuration for the UL Rx point of the UE may be associated/associated with a specific SRI (field), a specific SRS resource set, a specific CORESET pool index, a specific TCI state, or a specific TAG related to the UL Rx point. In other words, multiple UL Rx points may be deployed, and in this case, a different SRI (field), SRS resource set, CORESET pool index, TCI state, or specific TAG may be related/associated with each UL Rx point.

For example, a joint/UL TCI state may be related/associated with a specific UL Rx point. In other words, different joint/UL TCI states may be related/associated with different UL Rx points. In this case, for example, a joint/UL TCI state may be configured to be associated with a specific serving cell, and thus, a UL Rx point may also be configured to be associated with a specific serving cell. Here, within each joint/UL TCI state, i) PL-RS and ii) correction values (e.g., the new alpha value, the offset (Y) value for alpha, the new P0 value, etc.) of Alternatives 1 to 3 described above may be configured for uplink transmission (e.g., PUSCH/PUCCH/SRS transmission) for the corresponding UL Rx point. That is, different correction values for the aforementioned Alternatives 1 to 3 (e.g., the new alpha value, the offset (Y) value for alpha, the new P0 value, etc.) can be configured within different joint/UL TCI states. In this case, when a UE performs uplink transmission to a specific UL Rx point, the transmission power of the uplink transmission can be calculated based on i) the PL-RS and ii) the correction values for the aforementioned Alternatives 1 to 3 (e.g., the new alpha value, the offset (Y) value for alpha, the new P0 value, etc.) associated with the joint/UL TCI state configured for the UL Rx point. For example, if an offset (Y) value for alpha is configured within a joint/UL TCI state for a specific UL Rx point, the path loss can be derived from the PL-RS, the alpha value, and the offset (Y) value.

Additionally, open-loop power control parameters for a UL Rx point may be dynamically updated via lower-layer signaling (e.g., DCI, MAC CE, etc.). Here, the indicators (i.e., a specific SRI (field), a specific SRS resource set, a specific CORESET pool index, a specific TCI state, or a specific TAG associated with the UL Rx point) may be used to identify the UL Rx point. For example, if correction values for Alternatives 1 to 3 (e.g., a new alpha value, an offset (Y) value for alpha, a new P0 value, etc.) are configured within a joint/UL TCI state for a specific UL Rx point, the correction values for Alternatives 1 to 3 may be updated via lower-layer signaling (e.g., DCI, MAC CE, etc.).

Embodiment 3-3

A method for power headroom reporting (PHR) for a UL Rx point of a UE is proposed. UE's PHR transmission can be performed as an event-triggered operation by various events. Here, to indicate that the PHR is a report for a UL Rx point, a specific SRI (field), a specific SRS resource set, a specific CORESET pool index, a specific TCI state, or a specific TAG related to the UL Rx point can be included in the PHR as an indicator, as in Embodiment 3-1.

For convenience of explanation, Embodiment 3 was described by dividing it into detailed embodiments 3-1, 3-2, and 3-3. However, each detailed embodiment may be operated separately, or multiple detailed embodiments may be operated together. For example, when Embodiments 3-1 and 3-2 are applied together, the open-loop power control method according to Embodiment 3-2 may be used before the TPC command for closed-loop power control according to Embodiment 3-1 is transmitted. Furthermore, the final transmission power for uplink transmission to the UL Rx point may be determined by applying the closed-loop power control method according to Embodiment 3-1 and the open-loop power control method according to Embodiment 3-2 together. Furthermore, when an event according to Embodiment 3-3 occurs while the uplink to the UL Rx point is established, PHR for the UL Rx point may be performed.

Embodiment 4

Conventionally, i) a spatial relation framework and ii) joint and/or UL (separate) TCI states can be utilized to configure UL transmission beams. However, since there is no DL RS transmitted by the UL Rx point (even if the UE has beam correspondence capability), the base station cannot configure the DL RS as the UL transmission beam reference RS. Therefore, the problem (Problem 3) to find the optimal UL transmission beam for the UL Rx point solely through UE UL beam management (BM) operations (i.e., SRS beam sweeping) occurs.

In this embodiment, a method for finding the optimal UL transmission beam for the UL Rx point of a UE is proposed to solve Problem 3.

Embodiment 4-1

When the base station performs UL beam management operation utilizing SRS for beam management purposes of the UE (i.e., an SRS resource set with usage set to 'BeamManagement (BM)') (e.g., a spatial relationship within the beam management SRS resource set is not configured for the SRS resource(s)), the base station may configure a specific (most recent) BM SRS resource or a past (most recent) successful PUSCH transmission beam as an anchor beam for the SRS resource (set) for beam management purposes. By configuring the anchor beam in this way, the base station may enable the UE to utilize transmission beams close to the anchor beam when transmitting the SRS resource (set) for beam management purposes. When transmitting the SRS resource (set) for beam management purposes, the UE may transmit the SRS resource (set) using beams that are as close to the anchor beam as possible and have different beam directions.

To find the optimal UL beam for a UL Rx point, a set of SRS resources for BM use that serve as a reference anchor beam can be established in advance. For example, for periodic (P)/semi-persistent (SP) SRS resources (sets), the anchor beam can be established/activated using higher-layer signaling (e.g., RRC/MAC CE). As another example, for aperiodic (AP) SRS, the SRS can be triggered via DCI (indicating an SRS resource within the BM SRS resource set to be referenced or a past (most recent) successful PUSCH transmission beam).

This method allows the base station to utilize the UE's past successful transmission beams to find the optimal beam, thereby reducing the delay/overhead associated with finding the optimal beam.

Embodimennt 4-2

The base station may transmit a closed-loop command to perform uplink transmission to the UL Rx point by moving the beam vertically/horizontally up/down/left/right based on the past (most recent) successful PUSCH transmission beam of the UE.

And/or, the base station may signal/configure an indicator to the UE, indicating whether or not to utilize the variation/degree of variation of the past successful transmission beams based on the n (most recent) successful PUSCH transmission beams of the UE for future uplink transmissions, based on the variation/degree of variation trends of the past successful transmission beams. As another example, the base station may signal/configure transmission beam information to the UE for future uplink transmissions based on the n (most recent) successful PUSCH transmission beams of the UE (n is a natural number greater than or equal to 2), in the form of a linear combination of the n transmission beams (e.g., 0.9*most recent PUSCH transmission beam + 0.6*second most recent PUSCH transmission beam + 0.7*third most recent PUSCH transmission beam + ...). For this purpose, the coefficient values for each most recent/second most recent/third most recent... PUSCH transmission beam can be signaled/configured to the UE. As another example, the base station can signal/configure transmission beam information to be used for future uplink transmission in the form of a linear combination of the (most recent) SRS resources transmitted in the past in the SRS resource set for BM use that serves as a reference. Similarly, the coefficient values for each SRS resource can be signaled/configured to the UE.

The closed-loop command and/or the indicator may be included in the PUSCH/PUCCH/SRS/PRACH uplink transmission configuration/indication.

In addition, the closed-loop command and/or the indicator may be applied to a specific unified TCI in the unified TCI framework or to a specific SRI (field)/CORESET full index/TAG (related to uplink transmission).

This method has the advantage of reducing the delay/overhead associated with finding the optimal beam by allowing the base station to transmit a command for the current optimal beam by utilizing the UE's past successful transmission beams.

In Proposal 4, the (most recent) successful PUSCH transmission beam can be replaced with the (most recent) successful RACH/PUCCH transmission beam, etc., and the above-described operation can be applied in the same manner.

Embodiment 5

As a UE moves within a macro cell, the optimal UL Rx point for the UE among multiple UL Rx points within the macro cell may vary.

The base station may configure/indicate the UE (in advance) on timing advance (TA), power control (PC), and transmission beam-related information (e.g., offset, indicator, etc.) of Proposals 2 to 4 based on zones (or areas, regions, etc.) within the macro cell, taking into account the locations of multiple UL Rx points, the location of the UE, and/or whether the UE is indoors or outdoors. For example, the base station may signal (in advance) to the UE the UL Rx point that the UE should utilize for each location of the UE (i.e., each zone in which the UE is located within the macro cell) and the uplink-related parameters (i.e., offset, indicator, etc.) that should be applied for each location of the UE for the corresponding UL Rx point.

In particular, in the case of TA, the base station previously operated as an accumulated TA that was continuously updated with a TA command. According to this method, the base station can apply different TA values to each UL Rx point only with a TA update without notifying the UE of changes in the (serving) UL Rx point. However, in this case, since the TA difference between different UL Rx points from the UE may be large, the TA variation due to UL Rx point switching may not be covered by the accumulated TA method that only utilizes simple TA updates as above.

To address this issue, the base station can utilize the MAC-CE header, etc., to indicate/designate (e.g., a 1-bit flag) whether the corresponding TAC is a command for the accumulated TA up to the present or a command for an absolute value. Accordingly, when the (serving) UL Rx point of the UE changes, a new absolute TA can be indicated. This absolute TA command may mean to apply the absolute TA value based on the reference point related to the UL Rx point of Proposal 2.

Through this method, the UE can perform uplink transmission to the nearest UL Rx point depending on the UE's location, etc., and can receive optimized TA, PC, and transmission beam-related parameters/information from the base station even within the coverage of the corresponding UL Rx point.

Although the above-described embodiments have been described separately for convenience of explanation, multiple embodiments may be combined and operated together.

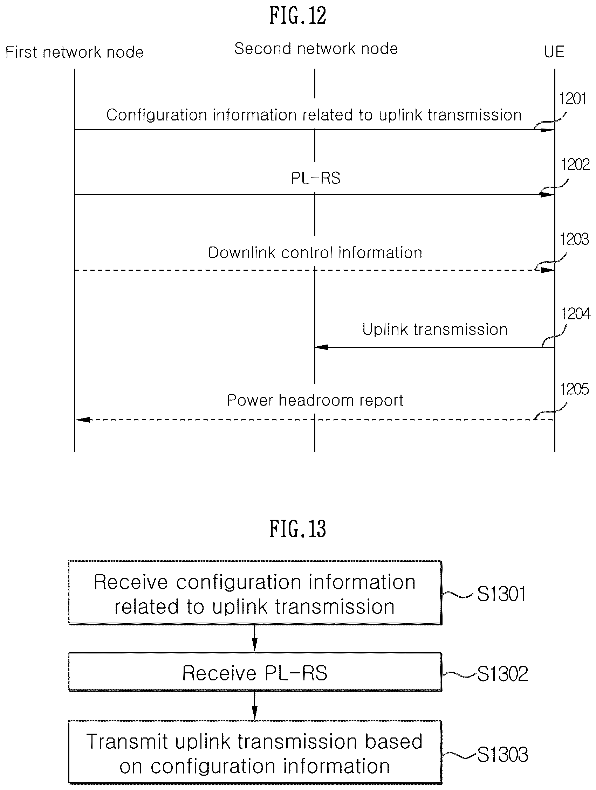

FIG. 12 illustrates a signaling method for an uplink transmission and reception method according to an embodiment of the present disclosure.

FIG. 12 illustrates signaling between a network (e.g., TRP 1, TRP 2) and a UE in a situation of multiple TRPs (i.e., M-TRP, or multi-cell, hereinafter, all TRPs can be replaced with cells) to which the methods proposed in the present invention (e.g., Embodiments 1 to 5, combinations of multiple embodiments in Embodiments 1 to 5) can be applied. Here, UE/Network are only examples and can be replaced with various devices. FIG. 12 is only for convenience of explanation and does not limit the scope of the present disclosure. In addition, some step(s) illustrated in FIG. 12 may be omitted depending on the situation and/or settings.

In FIG. 12, the first network node (i.e., macro cell) may correspond to a cell (macro cell) or base station capable of downlink transmission and uplink transmission, and the second network node (i.e., UL Rx point or UL TRP) may correspond to a cell or base station capable of only uplink transmission. The first network node and the second network node may be implemented as separate devices, or may be implemented as one device as a functionally distinct logical entity. For example, when implemented as one device as a functionally distinct logical entity, the first network node (DL/UL TRP 1) and the second network node (UL TRP 2) may be included in one base station, and DL/UL TRP 1 and UL TRP 2 may correspond to different cells, respectively.

In FIG. 12, uplink transmission refers to one or more of PUSCH, PUCCH, SRS, and PRACH.

Referring to FIG. 12, a UE receives configuration information related to uplink transmission from a first network node (S1201).

The configuration information may correspond to/include any one of the following, or may include one or more of the following: configuration information related to uplink resource scheduling according to Embodiment 1, configuration information related to uplink TA configuration according to Embodiment 2, configuration information related to uplink power control according to Embodiment 3, configuration information related to uplink beam configuration according to Embodiment 4, and configuration information related to zones for each second network node (UL Rx point) according to Embodiment 5, in the proposed method described above (e.g., Embodiments 1 to 5, a combination of multiple embodiments in Embodiments 1 to 5).

The configuration information may include information on the correspondence between each second network node and at least one of an SRI, an SRS resource set, a CORESET pool index, an SS set, a TCI state, and a TAG index within the plurality of second network nodes.

For example, the configuration information may include configuration information related to uplink power control according to Embodiment 3. Alternatively, the configuration information may be associated with configuration information related to uplink power control according to Embodiment 3, and configuration information related to uplink power control may be configured/provided to a UE in association with the configuration information.

In this case, the configuration information may include information on a path loss reference signal (PL-RS) (e.g., a CSI-RS or SS block) used to obtain a downlink path loss estimation for the uplink transmission.

In addition, the configuration information for uplink power control associated with the configuration information may include information on uplink power control parameter(s), such as Po (target reception power at the receiving end), alpha (a ratio for performing compensation for path loss), a closed loop index, etc.

Additionally, the configuration information may include information about a path loss offset along with the PL-RS, or information about a path loss offset may be included in the configuration information related to the uplink power control associated with the configuration information. The path loss offset may represent an offset from a value obtained by compensating the downlink path loss estimate calculated using the PL-RS with the alpha value.

Here, the path loss offset is used to adjust the uplink power when deriving the uplink power for each UL Rx Point (secondary network node) using the downlink path loss estimated from the PL-RS of the macro cell. Therefore, the path loss offset may be individually configured for each UL Rx Point (secondary network node). That is, when each configuration information is provided individually for each UL Rx Point (secondary network node), an individual path loss offset may be provided within each configuration information (or within the configuration information related to uplink power control associated with each configuration information).

For example, the configuration information may correspond to information on a joint/UL Transmission Configuration Indication (TCI) state related to uplink power control and uplink beam configuration (e.g., a TCI-state information element or a TCI-UL-state information element). The TCI-state or TCI-UL-state may include an identifier/index for a PL-RS. Here, information on uplink power control parameter(s) (e.g., an Uplink-PowerControl information element) may be configured/provided to the UE in association with the information on the joint/UL Transmission Configuration Indication (TCI) state. The uplink power control parameter(s) may include Po (target reception power at the receiver), alpha (a rate for performing path loss compensation), a closed-loop index, etc.

For example, a TCI-state or TCI-UL-state may be individually configured for each UL Rx Point (secondary network node), and an identifier/index for a PL-RS may be included/provided within each TCI-state or TCI-UL-state. Additionally, a single path loss offset may be included/provided within each TCI-state or TCI-UL-state (or within the Uplink-PowerControl associated with the TCI-state or TCI-UL-state).

The UE receives a PL-RS from the first network node (S1202).

The PL-RS may be one of the downlink reference signals within the cell associated with the first network node, such as a CSI-RS or an SS block.

The UE may receive downlink control information from the first network node (S1203).

Here, the downlink control information may correspond to information indicating information related to uplink transmission to the second network node, such as MAC CE or DCI.

For example, the downlink control information may include an update value for a path loss offset configured by the configuration information (or configuration information related to an uplink power control parameter associated with the configuration information).

In addition, for example, the downlink control information may include a transmit power control (TPC) command field for the uplink transmission. For example, the downlink control information may be group common downlink control information (e.g., including DCI format 2_3 used for transmission of TPC commands for SRS transmissions by one or more terminals) used for uplink transmission (e.g., PUSCH, PUCCH, SRS transmission) by one or more terminals including the UE. In this case, the downlink control information may include an indicator (e.g., a 1-bit indicator) indicating whether the TPC command field is related to the first network node (i.e., applied to uplink transmission to the first network node) or related to the second network node (i.e., applied to uplink transmission to the second network node).

Here, each code point of the TPC command field may be mapped to different TPC command values for the first network node and the second network node. In other words, a mapping table between the TPC command field and the TPC command value may be separately defined/configured for the first network node and the second network node.

Alternatively, the TPC command value for the second network node may be determined by applying an offset to the TPC command value indicated by the code point of the TPC command field for the first network node. In other words, a mapping table between the TPC command field and the TPC command value for the second network node is not separately defined/configured, but rather, the mapping table between the TPC command field and the TPC command value for the first network node is used, but a predetermined offset (or scaling) may be applied to determine the final TPC command value.

Additionally, for example, the downlink control information may include scheduling information for a PUSCH transmitted to a second network node. Furthermore, the downlink control information may include information for indicating/determining PUCCH resources transmitted to the second network node. Furthermore, the downlink control information may include information for indicating SRS resources (sets) for SRS transmitted to the second network node.

The UE transmits the uplink transmission to the second network node based on the configuration information (S1204).

The UE determines the transmission power and/or beam for the uplink transmission to the second network node based on the configuration information and performs the uplink transmission.

For example, as described above, the configuration information may correspond to information on a joint/UL transmission configuration indication (TCI) state related to uplink power control and uplink beam configuration (e.g., a TCI-state information element, a TCI-UL-state information element). In this case, the UE may transmit/modulate uplink transmission (i.e., DMRS and/or data/UCI for uplink) using the Tx beam and/or Tx power configured/indicated by the information on the joint/UL transmission configuration indication (TCI) state (i.e., configured/indicated by information on uplink power control parameter(s) associated with the information on the joint/UL transmission configuration indication (TCI) state).

Additionally, the configuration information may include information on a path loss offset together with the PL-RS, or the configuration information related to the uplink power control associated with the configuration information may include information on a path loss offset. In this case, the power for the uplink transmission can be determined based on a downlink path loss estimate derived from the path loss offset associated with the PL-RS and the configuration information.

In addition, when the path loss offset is updated by the downlink control information, the power for the uplink transmission may be determined based on a downlink path loss estimate derived from the PL-RS and the updated path loss offset.

In addition, when the TPC command field in the downlink control information relates to a second network node (i.e., when it is a TPC command for uplink transmission to the second network node), the power for the uplink transmission may be determined based on at least one of i) a downlink path loss estimate derived from the PL-RS and the path loss offset associated with the configuration information, and ii) a TPC command value indicated by the TPC command field.

The UE may transmit a power headroom report (PHR) for the second network node to the first network node (when a specific event occurs) (S1205).

In this case, the PHR may include an indicator indicating that the PHR is associated with the second network node.

FIG. 13 is a diagram illustrating an operation of a terminal for an uplink transmission and reception method according to an embodiment of the present disclosure.

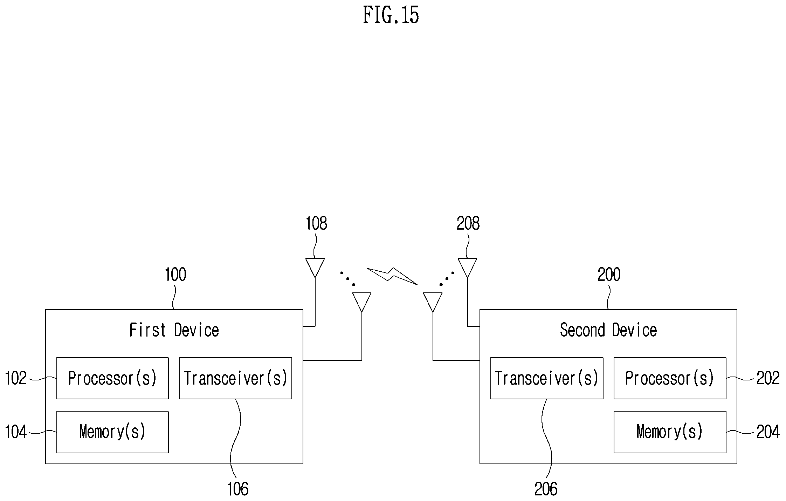

FIG. 13 illustrates an operation of a UE based on the previously proposed methods (e.g., embodiments 1 to 5, a combination of multiple embodiments in embodiments 1 to 5). The examples in FIG. 13 are for convenience of explanation and do not limit the scope of the present disclosure. Some step(s) illustrated in FIG. 13 may be omitted depending on circumstances and/or settings. In addition, the UE in FIG. 13 is only an example and may be implemented as a device illustrated in FIG. 15 below. For example, the processor (102/202) in FIG. 15 may control the transceiver (106/206) to transmit and receive channels/signals/data/information, etc., and may also control the processor (102/202) in FIG. 15 to store transmitted or received channels/signals/data/information, etc. in the memory (104/204).

In addition, the operation of FIG. 13 may be processed by one or more processors (102, 202) of FIG. 15, and the operation of FIG. 13 may be stored in a memory (e.g., one or more memories (104, 204) of FIG. 15) in the form of a command/program (e.g., an instruction, an executable code) for driving at least one processor (e.g., 102, 202) of FIG. 15.

In FIG. 13, the first network node (i.e., macro cell) may correspond to a cell (macro cell) or base station capable of downlink transmission and uplink transmission, and the second network node (i.e., UL Rx point or UL TRP) may correspond to a cell or base station capable of only uplink transmission. The first network node and the second network node may be implemented as separate devices, or may be implemented as one device as a functionally distinct logical entity. For example, when implemented as one device as a functionally distinct logical entity, the first network node (DL/UL TRP 1) and the second network node (UL TRP 2) may be included in one base station, and DL/UL TRP 1 and UL TRP 2 may correspond to different cells, respectively.

In FIG. 13, uplink transmission refers to one or more of PUSCH, PUCCH, SRS, and PRACH.

Referring to FIG. 13, a UE receives configuration information related to uplink transmission from a first network node (S1301).

The configuration information may correspond to/include any one of the following, or may include one or more of the following: configuration information related to uplink resource scheduling according to Embodiment 1, configuration information related to uplink TA configuration according to Embodiment 2, configuration information related to uplink power control according to Embodiment 3, configuration information related to uplink beam configuration according to Embodiment 4, and configuration information related to zones for each second network node (UL Rx point) according to Embodiment 5, in the proposed method described above (e.g., Embodiments 1 to 5, a combination of multiple embodiments in Embodiments 1 to 5).

The configuration information may include information on the correspondence between each second network node and at least one of an SRI, an SRS resource set, a CORESET pool index, an SS set, a TCI state, and a TAG index within the plurality of second network nodes.

For example, the configuration information may include configuration information related to uplink power control according to Embodiment 3. Alternatively, the configuration information may be associated with configuration information related to uplink power control according to Embodiment 3, and configuration information related to uplink power control may be configured/provided to a UE in association with the configuration information.

In this case, the configuration information may include information on a path loss reference signal (PL-RS) (e.g., a CSI-RS or SS block) used to obtain a downlink path loss estimation for the uplink transmission.

In addition, the configuration information for uplink power control associated with the configuration information may include information on uplink power control parameter(s), such as Po (target reception power at the receiving end), alpha (a ratio for performing compensation for path loss), a closed loop index, etc.

Additionally, the configuration information may include information about a path loss offset along with the PL-RS, or information about a path loss offset may be included in the configuration information related to the uplink power control associated with the configuration information. The path loss offset may represent an offset from a value obtained by compensating the downlink path loss estimate calculated using the PL-RS with the alpha value.

Here, the path loss offset is used to adjust the uplink power when deriving the uplink power for each UL Rx Point (secondary network node) using the downlink path loss estimated from the PL-RS of the macro cell. Therefore, the path loss offset may be individually configured for each UL Rx Point (secondary network node). That is, when each configuration information is provided individually for each UL Rx Point (secondary network node), an individual path loss offset may be provided within each configuration information (or within the configuration information related to uplink power control associated with each configuration information).

For example, the configuration information may correspond to information on a joint/UL Transmission Configuration Indication (TCI) state related to uplink power control and uplink beam configuration (e.g., a TCI-state information element or a TCI-UL-state information element). The TCI-state or TCI-UL-state may include an identifier/index for a PL-RS. Here, information on uplink power control parameter(s) (e.g., an Uplink-PowerControl information element) may be configured/provided to the UE in association with the information on the joint/UL Transmission Configuration Indication (TCI) state. The uplink power control parameter(s) may include Po (target reception power at the receiver), alpha (a rate for performing path loss compensation), a closed-loop index, etc.

For example, a TCI-state or TCI-UL-state may be individually configured for each UL Rx Point (secondary network node), and an identifier/index for a PL-RS may be included/provided within each TCI-state or TCI-UL-state. Additionally, a single path loss offset may be included/provided within each TCI-state or TCI-UL-state (or within the Uplink-PowerControl associated with the TCI-state or TCI-UL-state).

The UE receives a PL-RS from the first network node (S1302).

The PL-RS may be one of the downlink reference signals within the cell associated with the first network node, such as a CSI-RS or an SS block.

The UE transmits the uplink transmission to the second network node based on the configuration information (S1303).

The UE determines the transmission power and/or beam for the uplink transmission to the second network node based on the configuration information and performs the uplink transmission.

For example, as described above, the configuration information may correspond to information on a joint/UL transmission configuration indication (TCI) state related to uplink power control and uplink beam configuration (e.g., a TCI-state information element, a TCI-UL-state information element). In this case, the UE may transmit/modulate uplink transmission (i.e., DMRS and/or data/UCI for uplink) using the Tx beam and/or Tx power configured/indicated by the information on the joint/UL transmission configuration indication (TCI) state (i.e., configured/indicated by information on uplink power control parameter(s) associated with the information on the joint/UL transmission configuration indication (TCI) state).

Additionally, the configuration information may include information on a path loss offset together with the PL-RS, or the configuration information related to the uplink power control associated with the configuration information may include information on a path loss offset. In this case, the power for the uplink transmission can be determined based on a downlink path loss estimate derived from the path loss offset associated with the PL-RS and the configuration information.

Here, although not shown in FIG. 13, the UE may receive, from the first network, downlink control information for indicating information related to uplink transmission node to the second network node, which may be, for example, MAC CE or DCI.

For example, the downlink control information may include an update value for a path loss offset configured by the configuration information (or configuration information related to an uplink power control parameter associated with the configuration information).

When the path loss offset is updated by the downlink control information, the power for the uplink transmission may be determined based on a downlink path loss estimate derived from the PL-RS and the updated path loss offset.

In addition, for example, the downlink control information may include a transmit power control (TPC) command field for the uplink transmission. For example, the downlink control information may be group common downlink control information (e.g., including DCI format 2_3 used for transmission of TPC commands for SRS transmissions by one or more terminals) used for uplink transmission (e.g., PUSCH, PUCCH, SRS transmission) by one or more terminals including the UE. In this case, the downlink control information may include an indicator (e.g., a 1-bit indicator) indicating whether the TPC command field is related to the first network node (i.e., applied to uplink transmission to the first network node) or related to the second network node (i.e., applied to uplink transmission to the second network node).

Here, each code point of the TPC command field may be mapped to different TPC command values for the first network node and the second network node. In other words, a mapping table between the TPC command field and the TPC command value may be separately defined/configured for the first network node and the second network node.

Alternatively, the TPC command value for the second network node may be determined by applying an offset to the TPC command value indicated by the code point of the TPC command field for the first network node. In other words, a mapping table between the TPC command field and the TPC command value for the second network node is not separately defined/configured, but rather, the mapping table between the TPC command field and the TPC command value for the first network node is used, but a predetermined offset (or scaling) may be applied to determine the final TPC command value.

In addition, when the TPC command field in the downlink control information relates to a second network node (i.e., when it is a TPC command for uplink transmission to the second network node), the power for the uplink transmission may be determined based on at least one of i) a downlink path loss estimate derived from the PL-RS and the path loss offset associated with the configuration information, and ii) a TPC command value indicated by the TPC command field.

Meanwhile, although not shown in FIG. 13, the UE may transmit a Power Headroom Report (PHR) for the second network node to the first network node (when a specific event occurs). In this case, the PHR may include an indicator indicating that the PHR is associated with the second network node.

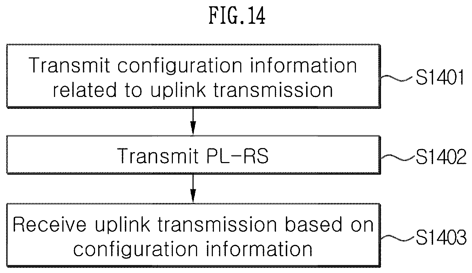

FIG. 14 is a diagram illustrating an operation of a device (base station) for an uplink transmission and reception method according to an embodiment of the present disclosure.

FIG. 14 illustrates an operation of a device (base station) based on the previously proposed methods (e.g., embodiments 1 to 5, a combination of multiple embodiments in embodiments 1 to 5). The examples in FIG. 14 are for convenience of explanation and do not limit the scope of the present disclosure. Some step(s) illustrated in FIG. 14 may be omitted depending on circumstances and/or settings. In addition, the device (base station) in FIG. 14 is only an example and may be implemented as a device illustrated in FIG. 15 below. For example, the processor (102/202) in FIG. 15 may control the transceiver (106/206) to transmit and receive channels/signals/data/information, etc., and may also control the processor (102/202) in FIG. 15 to store transmitted or received channels/signals/data/information, etc. in the memory (104/204).

In addition, the operation of FIG. 14 may be processed by one or more processors (102, 202) of FIG. 15, and the operation of FIG. 13 may be stored in a memory (e.g., one or more memories (104, 204) of FIG. 15) in the form of a command/program (e.g., an instruction, an executable code) for driving at least one processor (e.g., 102, 202) of FIG. 15.

In FIG. 14, the first network node (i.e., macro cell) may correspond to a cell (macro cell) or base station capable of downlink transmission and uplink transmission, and the second network node (i.e., UL Rx point or UL TRP) may correspond to a cell or base station capable of only uplink transmission. The first network node and the second network node may be implemented as separate devices, or may be implemented as one device as a functionally distinct logical entity. For example, when implemented as one device as a functionally distinct logical entity, the first network node (DL/UL TRP 1) and the second network node (UL TRP 2) may be included in one base station, and DL/UL TRP 1 and UL TRP 2 may correspond to different cells, respectively.

In FIG. 14, uplink transmission refers to one or more of PUSCH, PUCCH, SRS, and PRACH.

Referring to FIG. 14, a first network node transmits configuration information related to uplink transmission to the terminal (S1401).

The configuration information may correspond to/include any one of the following, or may include one or more of the following: configuration information related to uplink resource scheduling according to Embodiment 1, configuration information related to uplink TA configuration according to Embodiment 2, configuration information related to uplink power control according to Embodiment 3, configuration information related to uplink beam configuration according to Embodiment 4, and configuration information related to zones for each second network node (UL Rx point) according to Embodiment 5, in the proposed method described above (e.g., Embodiments 1 to 5, a combination of multiple embodiments in Embodiments 1 to 5).

The configuration information may include information on the correspondence between each second network node and at least one of an SRI, an SRS resource set, a CORESET pool index, an SS set, a TCI state, and a TAG index within the plurality of second network nodes.

For example, the configuration information may include configuration information related to uplink power control according to Embodiment 3. Alternatively, the configuration information may be associated with configuration information related to uplink power control according to Embodiment 3, and configuration information related to uplink power control may be configured/provided to a UE in association with the configuration information.

In this case, the configuration information may include information on a path loss reference signal (PL-RS) (e.g., a CSI-RS or SS block) used to obtain a downlink path loss estimation for the uplink transmission.

In addition, the configuration information for uplink power control associated with the configuration information may include information on uplink power control parameter(s), such as Po (target reception power at the receiving end), alpha (a ratio for performing compensation for path loss), a closed loop index, etc.

Additionally, the configuration information may include information about a path loss offset along with the PL-RS, or information about a path loss offset may be included in the configuration information related to the uplink power control associated with the configuration information. The path loss offset may represent an offset from a value obtained by compensating the downlink path loss estimate calculated using the PL-RS with the alpha value.

Here, the path loss offset is used to adjust the uplink power when deriving the uplink power for each UL Rx Point (secondary network node) using the downlink path loss estimated from the PL-RS of the macro cell. Therefore, the path loss offset may be individually configured for each UL Rx Point (secondary network node). That is, when each configuration information is provided individually for each UL Rx Point (secondary network node), an individual path loss offset may be provided within each configuration information (or within the configuration information related to uplink power control associated with each configuration information).

For example, the configuration information may correspond to information on a joint/UL Transmission Configuration Indication (TCI) state related to uplink power control and uplink beam configuration (e.g., a TCI-state information element or a TCI-UL-state information element). The TCI-state or TCI-UL-state may include an identifier/index for a PL-RS. Here, information on uplink power control parameter(s) (e.g., an Uplink-PowerControl information element) may be configured/provided to the UE in association with the information on the joint/UL Transmission Configuration Indication (TCI) state. The uplink power control parameter(s) may include Po (target reception power at the receiver), alpha (a rate for performing path loss compensation), a closed-loop index, etc.

For example, a TCI-state or TCI-UL-state may be individually configured for each UL Rx Point (secondary network node), and an identifier/index for a PL-RS may be included/provided within each TCI-state or TCI-UL-state. Additionally, a single path loss offset may be included/provided within each TCI-state or TCI-UL-state (or within the Uplink-PowerControl associated with the TCI-state or TCI-UL-state).

The first network node transmits PL-RS to the UE (S1402).

The PL-RS may be one of the downlink reference signals within the cell associated with the first network node, such as a CSI-RS or an SS block.

The second network node receives the uplink transmission from the UE based on the configuration information (S1403).

The UE determines the transmission power and/or beam for the uplink transmission to the second network node based on the configuration information and performs the uplink transmission.

For example, as described above, the configuration information may correspond to information on a joint/UL transmission configuration indication (TCI) state related to uplink power control and uplink beam configuration (e.g., a TCI-state information element, a TCI-UL-state information element). In this case, the UE may transmit/modulate uplink transmission (i.e., DMRS and/or data/UCI for uplink) using the Tx beam and/or Tx power configured/indicated by the information on the joint/UL transmission configuration indication (TCI) state (i.e., configured/indicated by information on uplink power control parameter(s) associated with the information on the joint/UL transmission configuration indication (TCI) state).

Additionally, the configuration information may include information on a path loss offset together with the PL-RS, or the configuration information related to the uplink power control associated with the configuration information may include information on a path loss offset. In this case, the power for the uplink transmission can be determined based on a downlink path loss estimate derived from the path loss offset associated with the PL-RS and the configuration information.

Here, although not shown in FIG. 14, the first network node may transmit downlink control information to the UE to indicate the UE on information related to uplink transmission to the second network node, which may be, for example, MAC CE or DCI.

For example, the downlink control information may include an update value for a path loss offset configured by the configuration information (or configuration information related to an uplink power control parameter associated with the configuration information).

When the path loss offset is updated by the downlink control information, the power for the uplink transmission may be determined based on a downlink path loss estimate derived from the PL-RS and the updated path loss offset.

In addition, for example, the downlink control information may include a transmit power control (TPC) command field for the uplink transmission. For example, the downlink control information may be group common downlink control information (e.g., including DCI format 2_3 used for transmission of TPC commands for SRS transmissions by one or more terminals) used for uplink transmission (e.g., PUSCH, PUCCH, SRS transmission) by one or more terminals including the UE. In this case, the downlink control information may include an indicator (e.g., a 1-bit indicator) indicating whether the TPC command field is related to the first network node (i.e., applied to uplink transmission to the first network node) or related to the second network node (i.e., applied to uplink transmission to the second network node).

Here, each code point of the TPC command field may be mapped to different TPC command values for the first network node and the second network node. In other words, a mapping table between the TPC command field and the TPC command value may be separately defined/configured for the first network node and the second network node.

Alternatively, the TPC command value for the second network node may be determined by applying an offset to the TPC command value indicated by the code point of the TPC command field for the first network node. In other words, a mapping table between the TPC command field and the TPC command value for the second network node is not separately defined/configured, but rather, the mapping table between the TPC command field and the TPC command value for the first network node is used, but a predetermined offset (or scaling) may be applied to determine the final TPC command value.

In addition, when the TPC command field in the downlink control information relates to a second network node (i.e., when it is a TPC command for uplink transmission to the second network node), the power for the uplink transmission may be determined based on at least one of i) a downlink path loss estimate derived from the PL-RS and the path loss offset associated with the configuration information, and ii) a TPC command value indicated by the TPC command field.

Meanwhile, although not illustrated in FIG. 14, the first network node may receive a Power Headroom Report (PHR) for the second network node from the UE (when a specific event occurs). In this case, the PHR may include an indicator indicating that the PHR is associated with the second network node.

General Device to which the Present Disclosure may be applied

FIG. 15 is a diagram which illustrates a block diagram of a wireless communication device according to an embodiment of the present disclosure.

In reference to FIG. 15, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method comprising:

receiving, by a user equipment (UE), configuration information related to uplink transmission from a first network node, wherein the configuration information includes information for a pathloss reference signal (PL-RS) used to obtain a downlink pathloss estimate for the uplink transmission;
receiving, by the UE, the PL-RS from the first network node; and
transmitting, by the UE, the uplink transmission to the second network node based on the configuration information,
wherein power for the uplink transmission is determined based on a downlink pathloss estimate derived from the PL-RS and a pathloss offset related to the configuration information.

2.   The method of claim 1, wherein the pathloss offset is provided to the UE in configuration information related to an uplink power control parameter associated with the configuration information.

3.   The method of claim 1, wherein the configuration information related to the uplink power control parameter further includes an alpha value for compensating for a downlink pathloss estimate, and
wherein the pathloss offset represents an offset from a value obtained by compensating for a downlink pathloss estimate calculated using the PL-RS with the alpha value.

**4.** The method of claim 1, the configuration information is information for a joint transmission configuration indication (TCI) state or an uplink TCI state.

**5.** The method of claim 4, wherein the pathloss offset associated with the information for the joint TCI state or the uplink TCI state is updated by a MAC control element (CE) or downlink control information (DCI).

**6.** The method of claim 1, further comprising:

receiving DCI including a transmit power control (TPC) command field for the uplink transmission,
wherein the DCI includes an indicator indicating whether the TPC command field relates to the first network node or the second network node.

**7.** The method of claim 6, wherein the DCI is group common DCI used for sounding reference signal (SRS) transmission by one or more UEs, including the UE.

**8.** The method of claim 6, wherein, based on the TPC command field relating to the second network node, the power for the uplink transmission is determined based on at least one of i) a downlink pathloss estimate derived from a pathloss offset associated with the PL-RS and the configuration information, and ii) a TPC command value indicated by the TPC command field.

**9.** The method of claim 6, wherein each code point of the TPC command field is mapped to different TPC command values for the first network node and the network node.

**10.** The method of claim 6, wherein a TPC command value for the second network node is determined by applying an offset to a TPC command value indicated by a code point of the TPC command field for the first network node.

**11.** The method of claim 1, further comprising:

transmitting a power headroom report (PHR) for the second network node to the first network node,
wherein the PHR includes an indicator indicating that the PHR is related to the second network node.

**12.** The method of claim 1, wherein the first network node corresponds to a macro cell supporting both downlink and uplink transmission, and the second network node corresponds to an uplink reception point.

**13.** The method of claim 12, wherein the uplink reception point supports uplink reception from one or more UEs, including the UE, and does not support downlink transmission to the one or more UEs.

**14.** A user equipment (UE) comprising:

at least one transceiver for transmitting and receiving a wireless signal; and
at least one processor for controlling the at least one transceiver,
wherein the at least one processor configured to:

receive configuration information related to uplink transmission from a first network node, wherein the configuration information includes information for a pathloss reference signal (PL-RS) used to obtain a downlink pathloss estimate for the uplink transmission;
receive the PL-RS from the first network node; and
transmit the uplink transmission to the second network node based on the configuration information,
wherein power for the uplink transmission is determined based on a downlink pathloss estimate derived from the PL-RS and a pathloss offset related to the configuration information.

**15.** At least one non-transitory computer-readable medium storing at least one instruction, wherein the at least one instruction executable by at least one processor controls a user equipment (UE) to:

receive configuration information related to uplink transmission from a first network node, wherein the configuration information includes information for a pathloss reference signal (PL-RS) used to obtain a downlink pathloss estimate for the uplink transmission;
receive the PL-RS from the first network node; and

transmit the uplink transmission to the second network node based on the configuration information, wherein power for the uplink transmission is determined based on a downlink pathloss estimate derived from the PL-RS and a pathloss offset related to the configuration information.

16. A processing apparatus configured to control a user equipment (UE), the processing apparatus comprising:

at least one processor; and
at least one computer memory operably connected to the at least one processor and storing instructions that, based on being executed by the at least one processor, perform operations comprising:

receiving configuration information related to uplink transmission from a first network node, wherein the configuration information includes information for a pathloss reference signal (PL-RS) used to obtain a downlink pathloss estimate for the uplink transmission;
receiving the PL-RS from the first network node; and
transmitting the uplink transmission to the second network node based on the configuration information, wherein power for the uplink transmission is determined based on a downlink pathloss estimate derived from the PL-RS and a pathloss offset related to the configuration information.

17. A method comprising:

transmitting, by a first network node, configuration information related to uplink transmission to a user equipment (UE), wherein the configuration information includes information for a pathloss reference signal (PL-RS) used to obtain a downlink pathloss estimate for the uplink transmission;
transmitting, by the first network node, the PL-RS to the UE; and
receiving, by a second network node, the uplink transmission from the UE based on the configuration information, wherein power for the uplink transmission is determined based on a downlink pathloss estimate derived from the PL-RS and a pathloss offset related to the configuration information.

18. A device comprising:

at least one transceiver for transmitting and receiving a wireless signal; and
at least one processor for controlling the at least one transceiver,
wherein the at least one processor configured to:

transmit, by a first network node, configuration information related to uplink transmission to a user equipment (UE), wherein the configuration information includes information for a pathloss reference signal (PL-RS) used to obtain a downlink pathloss estimate for the uplink transmission;
transmit, by the first network node, the PL-RS to the UE; and
receive, by a second network node, the uplink transmission from the UE based on the configuration information,
wherein power for the uplink transmission is determined based on a downlink pathloss estimate derived from the PL-RS and a pathloss offset related to the configuration information.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends
on subcarrier
spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

FIG.4

FIG.5

Resource grid

A carrier
(up to 3300 subcarriers, i.e., 275 RBs)

A BWP

1 RB=12 subcarrier

1 RE

1 subcarrier

1 Symbol

l=0 · · · · ·

k=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

## FIG.7

| Downlink frame i |
|---|

| Uplink frame i |
|---|

$(N_{TA} + N_{TA,offset})T_C$

## FIG.8

| | | |
|---|---|---|
| R | Timing advance command | Oct 1 |
| Timing advance command | UL grant | Oct 2 |
| UL grant | | Oct 3 |
| UL grant | | Oct 4 |
| UL grant | | Oct 5 |
| Temporary C-RNTI | | Oct 6 |
| Temporary C-RNTI | | Oct 7 |

## FIG.9

| TAG ID | Timing advance command | Oct 1 |
|---|---|---|

## FIG.10

Base station Rx beam sweeping

SRS#0 Rx    SRS#1 Rx    SRS#N Rx    . . .

SRS #0,1,...,N

Terminal Tx beam (fixed)

(a)

Base station Rx beam fixed

SRS#0    SRS#1

Terminal Tx beam sweeping

(b)

## FIG.11

TERMINAL                                    BASE STATION

                                                    S1010
SRS Config. IE
(usage-BM, SRS-SpatialRelation Info)

S1020 — Determine Tx beam for
        SRS resource

                                                    S1030
Transmitting SRS through determined Tx beam

                                                    S1040
feedback

## FIG.12

First network node      Second network node      UE

Configuration information related to uplink transmission    1201

PL-RS    1202

Downlink control information    1203

Uplink transmission    1204

Power headroom report    1205

## FIG.13

| Receive configuration information related to uplink transmission | S1301 |

↓

| Receive PL-RS | S1302 |

↓

| Transmit uplink transmission based on configuration information | S1303 |

FIG.14

| Transmit configuration information related to uplink transmission | ~S1401 |

| Transmit PL-RS | ~S1402 |

| Receive uplink transmission based on configuration information | ~S1403 |

EP 4 783 476 A1

FIG.15

# EP 4 783 476 A1

## INTERNATIONAL SEARCH REPORT

| International application No. |
|---|
| **PCT/KR2024/014199** |

### A. CLASSIFICATION OF SUBJECT MATTER

**H04B 7/0413**(2017.01)i; **H04W 72/1268**(2023.01)i; **H04W 72/21**(2023.01)i; **H04W 72/0446**(2023.01)i; **H04W 72/0453**(2023.01)i; **H04W 72/0457**(2023.01)i; **H04W 72/231**(2023.01)i; **H04W 72/232**(2023.01)i; **H04W 52/08**(2009.01)i; **H04W 52/10**(2009.01)i

According to International Patent Classification (IPC) or to both national classification and IPC

### B. FIELDS SEARCHED

Minimum documentation searched (classification system followed by classification symbols)

H04B 7/0413(2017.01); H04W 52/14(2009.01); H04W 52/24(2009.01); H04W 52/32(2009.01); H04W 52/54(2009.01); H04W 72/231(2023.01); H04W 84/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경로손실 참조 신호(pathloss reference signal, PL-RS), 업링크 수신 포인트(UL Rx point), 전력(power), 오프셋(offset)

### C. DOCUMENTS CONSIDERED TO BE RELEVANT

| Category* | Citation of document, with indication, where appropriate, of the relevant passages | Relevant to claim No. |
|---|---|---|
| X | US 2021-0306958 A1 (QUALCOMM INCORPORATED) 30 September 2021 (2021-09-30) See paragraphs [0048]-[0049], [0107] and [0147]-[0149]; and claims 1 and 5-7. | 1-2,11-18 |
| Y | | 3-10 |
| Y | WO 2023-019419 A1 (QUALCOMM INCORPORATED) 23 February 2023 (2023-02-23) See paragraphs [0097], [0102]-[0104], [0111], [0118], [0123], [0134], [0140] and [0142]. | 3,6-10 |
| Y | US 2023-0217372 A1 (QUALCOMM INCORPORATED) 06 July 2023 (2023-07-06) See paragraph [0104]. | 4-5 |
| A | US 2022-0346025 A1 (QUALCOMM INCORPORATED) 27 October 2022 (2022-10-27) See paragraphs [0092]-[0094]. | 1-18 |

☑ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 December 2024** | **31 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/014199** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2023-0123012 A (LG ELECTRONICS INC.) 22 August 2023 (2023-08-22)<br>See paragraphs [0255] and [0257]; and claims 1-6. | 1-18 |

Form PCT/ISA/210 (second sheet) (July 2022)

**INTERNATIONAL SEARCH REPORT**
Information on patent family members

International application No.

**PCT/KR2024/014199**

| Patent document cited in search report | | | Publication date (day/month/year) | Patent family member(s) | | | Publication date (day/month/year) |
|---|---|---|---|---|---|---|---|
| US | 2021-0306958 | A1 | 30 September 2021 | CN | 115336332 | A | 11 November 2022 |
| | | | | EP | 4128903 | A1 | 08 February 2023 |
| | | | | US | 11690022 | B2 | 27 June 2023 |
| | | | | WO | 2021-194703 | A1 | 30 September 2021 |
| WO | 2023-019419 | A1 | 23 February 2023 | BR | 112024002038 | A2 | 30 April 2024 |
| | | | | CN | 117837225 | A | 05 April 2024 |
| | | | | EP | 4388796 | A1 | 26 June 2024 |
| | | | | KR | 10-2024-0042440 | A | 02 April 2024 |
| | | | | US | 2024-0397443 | A1 | 28 November 2024 |
| US | 2023-0217372 | A1 | 06 July 2023 | CN | 118435664 | A | 02 August 2024 |
| | | | | EP | 4461031 | A1 | 13 November 2024 |
| | | | | KR | 10-2024-0123338 | A | 13 August 2024 |
| | | | | TW | 202345637 | A | 16 November 2023 |
| | | | | US | 11974230 | B2 | 30 April 2024 |
| US | 2022-0346025 | A1 | 27 October 2022 | BR | 112023021077 | A2 | 12 December 2023 |
| | | | | CN | 117121572 | A | 24 November 2023 |
| | | | | EP | 4327596 | A1 | 28 February 2024 |
| | | | | KR | 10-2023-0172486 | A | 22 December 2023 |
| | | | | WO | 2022-225607 | A1 | 27 October 2022 |
| KR | 10-2023-0123012 | A | 22 August 2023 | EP | 4274319 | A1 | 08 November 2023 |
| | | | | US | 2024-0064649 | A1 | 22 February 2024 |
| | | | | WO | 2022-145959 | A1 | 07 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- physical channels and modulation. *3GPP LTE, TS 36.211*
- multiplexing and channel coding. *TS 36.212*
- physical layer procedures. *TS 36.213*
- overall description. *TS 36.300*
- radio resource control. *TS 36.331*
- physical channels and modulation. *3GPP NR, TS 38.211*
- multiplexing and channel coding. *TS 38.212*
- physical layer procedures for control. *TS 38.213*
- physical layer procedures for data. *TS 38.214*
- NR and NG-RAN(New Generation-Radio Access Network) overall description. *TS 38.300*
- radio resource control protocol specification. *TS 38.331*